(19) Europäisches Patentamt
European Patent Office
Office européen des brevets

(11) **EP 3 809 115 A1**

(12) **EUROPÄISCHE PATENTANMELDUNG**

(43) Veröffentlichungstag:
**21.04.2021 Patentblatt 2021/16**

(21) Anmeldenummer: **19204113.5**

(22) Anmeldetag: **18.10.2019**

(51) Int Cl.:
***G01N 15/14*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Leibniz-Institut für Plasmaforschung und Technologie e.V.
17489 Greifswald (DE)**

(72) Erfinder:
• **Poschkamp, Broder
 17489 Greifswald (DE)**
• **Bekeschus, Sander, Dr.
 17489 Greifswald (DE)**

(74) Vertreter: **Schulz Junghans
Patentanwälte PartGmbB
Großbeerenstraße 71
10963 Berlin (DE)**

(54) **METHODE ZUR KLASSIFIKATION VON THROMBOZYTEN-AGGREGATIONEN**

(57) Die Erfindung betrifft eine Methode zur Detektion eines Thrombozyten-Objektes und zur Ermittlung einer Anzahl an Thrombozyten in dem Thrombozyten-Objekt in einer Probe, wobei ein Thrombozyten-Objekt mindestens einen Thrombozyten aufweist. Insbesondere weist die Probe Vollblut auf. Dabei wird mindestens ein Bild aus der Probe aufgenommen, insbesondere wobei das Bild ein Thrombozyten-Objekt zeigt, wobei das mindestens eine Bild insbesondere mittels eines bildgebenden Durchflusszytometers erzeugt ist. Das mindestens eine Bild der Probe wird mithilfe eines trainierten Faltungsnetzwerkes, welches insbesondere auf einer Computervorrichtung ausgeführt wird, untersucht. Das trainierte Faltungsnetzwerk ist dazu eingerichtet, auf dem mindestens einen Bild das Thrombozyten-Objekt zu erkennen, wobei das trainierte Faltungsnetzwerk dazu ausgebildet ist, eine Anzahl von Thrombozyten in dem erkannten Thrombozyten-Objekt zu bestimmen und auszugeben.

EP 3 809 115 A1

**Beschreibung**

Blutplättchen, auch Thrombozyten genannt, sind Bestandteile des Blutes. Thrombozyten können aneinanderheften und Aggregationen ausbilden. Im Rahmen dieser Anmeldung wird eine Aggregation, die aus Thrombozyten bestehen auch als Thrombozyten-Aggregation oder als Thrombozyten-Thrombozyten-Aggregation bezeichnet.

Thrombozyten wirken entscheidend an der Blutgerinnung und der Wundheilung mit. Aggregationen, die sich in einem Blutgefäß bilden, können einen ungehinderten Blutfluss durch die Blutgefäße verhindern, der eine optimale Versorgung der Zellen, Gewebe und Organe in einem Körper ermöglicht, und somit zu einer Unterversorgung der entsprechenden Zellen führen.

Eine genaue Charakterisierung der Anzahl von Thrombozyten-Aggregationen im Blut ist daher für unterschiedliche medizinische Zwecke von großem Interesse. Beispielsweise ist die Quantifizierung der Thrombozyten-Aggregationen von hohem medizinischen Interesse im Hinblick auf Patienten mit einem erhöhten kardiovaskulären Risiko. Das kardiovaskuläre Risiko beschreibt die Wahrscheinlichkeit, des Auftretens einer Herz-Kreislauferkrankung, wie eines Schlaganfalls oder eines Herzinfarktes. Eine derartige Erkrankung beruht auf einer Durchblutungsstörung, durch die die optimale Versorgung der Gewebe verhindert ist. Die Durchblutungsstörung kann durch ein Blutgerinnsel, d. h. einen Zusammenschluss aus Bestandteilen des Blutes, hervorgerufen werden, beispielsweise durch das Aggregieren von Thrombozyten. Medikamente, die gezielt gegen derartige Herz-Kreislauferkrankungen eingesetzt werden, sogenannte "Thrombozytenaggregationshemmer", zählen zu den umsatzstärksten Medikamenten der pharmazeutischen Industrie.

Andererseits ist von Interesse, die Blutgerinnung von Patienten zu überwachen, die ein Medikament zur Hemmung der Gerinnung ("Gerinnungshemmer", "Blutverdünner") einnehmen.

Im Stand der Technik sind Methoden zur Ermittlung der Gerinnungsfähigkeit bekannt. Beispielsweise kann mithilfe einer Impedanzmessung (d. h. durch ein Messen des elektrischen Widerstandes) eine globale Gerinnungsfähigkeit bestimmt werden. Diese Methode liefert jedoch keine direkten Informationen hinsichtlich der exakten Thrombozyten-Aggregationen.

Ferner sind aus dem Stand der Technik Methoden zur Detektion von Thrombozyten-Thrombozyten-Aggregationen bekannt. Beispielsweise können Thrombozyten-Aggregationen mittels eines zytometrischen Messverfahrens, insbesondere mittels "fluorescence activated cell sorting" (FACS), detektiert werden. In der Publikation "Small Aggregates of Platelets Can Be Detected Sensitively by a Flow Cytometer Equipped With an Imaging Device: Mechanisms of Epinephrine-Induced Aggregation and Antiplatelet Effects of Beraprost" (K. Satoh et al. (2002), Cytometry, 48: 194-201) wurde eine Methode beschrieben, in der mithilfe von bildgebender Durchflusszytometrie Thrombozyten-Thrombozyten-Aggregationen von anderen Bestandteilen des Blutes unterschieden werden können. Die Publikation "Label-free detection of aggregated platelets in blood by machine-learning-aided optofluidic time-scretch microscopy" (Y. Jiang et al. (2017), Lab on a Chip, 17, 2426-2434) beschreibt, dass mithilfe von maschinellem Lernen eine Unterscheidung zwischen weißen Blutzellen, einzelnen Thrombozyten und Thrombozyten-Thrombozyten-Aggregationen mit mehr als zehn Thrombozyten erreichbar ist. In den letzten Jahren wurde durch eine Verbesserung der technischen Gegebenheiten (sowie der Software) eine breite Anwendung von neuronalen Netzen ermöglicht.

Die beschriebenen Methoden sind insbesondere darauf ausgerichtet, Thrombozyten-Thrombozyten-Aggregationen von anderen Blutbestandteilen zu unterscheiden und/oder nicht-aggregierte einzelne Thrombozyten von Thrombozyten-Thrombozyten-Aggregationen zu unterscheiden, insbesondere von Thrombozyten-Thrombozyten-Aggregationen, die aus mindestens zehn Thrombozyten bestehen. Im Prozess der Wundheilung können Thrombozyten-Thrombozyten-Aggregationen mit mindestens zehn Thrombozyten auftreten.

Mithilfe von pharmakologischen Wirkstoffen ist es möglich Thrombozyten-Aggregationen mit mehr als vier, insbesondere mehr als zehn, Thrombozyten zu erzeugen. Im Rahmen der Anmeldung wird eine derartige Thrombozyten-Aggregation auch als große Aggregation (große Thrombozyten-Aggregation) bezeichnet.

Während in der Wundheilung insbesondere große Aggregationen auftreten können, treten unter physiologischen Bedingungen im menschlichen Blut (Blutfluss) insbesondere Thrombozyten-Thrombozyten-Aggregationen auf, die aus zwei oder drei Thrombozyten bestehen. Die oben beschriebenen Methoden sind für die Detektion oder Charakterisierung derartiger Aggregationen nicht einfach anwendbar. Für eine genaue Diagnostik ist eine genauere Charakterisierung derartiger Thrombozyten-Thrombozyten-Aggregationen jedoch von großem medizinischen und pharmazeutischen Interesse.

Diese Aufgabe wird durch die Methode nach Anspruch 1 gelöst oder durch das System nach Anspruch 14 oder durch das Computerprogramm gemäß Anspruch 15. Vorteilhafte Ausführungsformen der Methode sind in den Unteransprüchen 2 bis 13 angegeben. Diese und weitere Ausführungsformen werden nachfolgend beschrieben.

Ein erster Aspekt der Erfindung betrifft eine Methode zur Detektion eines Thrombozyten-Objektes und zur Ermittlung einer Anzahl an Thrombozyten in dem Thrombozyten-Objekt in einer Probe. Die Probe weist insbesondere Vollblut auf. Es wird mindestens ein Bild aus der Probe aufgenommen. Das mindestens eine Bild ist dabei insbesondere mittels eines bildgebenden Durchflusszytometers erzeugt. Das mindestens eine Bild der Probe wird mithilfe eines trainierten Faltungsnetzwerkes untersucht, wobei das trainierte Faltungsnetzwerk dazu eingerichtet ist, auf dem mindestens einen Bild das Thrombozyten-Objekt zu erkennen, und wobei das trainierte Faltungsnetzwerk dazu ausgebildet ist, eine Anzahl von Thrombozyten in dem erkannten Thrombozyten-Objekt zu bestimmen und auszugeben.

Mit dem Begriff "Thrombozyten-Objekt" ist ein Objekt gemeint, das mindestens einen Thrombozyten aufweist. Insbesondere ist mit dem Begriff "Thrombozyten-Objekt" ein Objekt gemeint, das aus mindestens einem Thrombozyten besteht. In einer Ausführungsform ist unter dem Begriff "Thrombozyten-Objekt" ein einzelner Thrombozyt zu verstehen, der nicht in einer Aggregation, insbesondere nicht in einer Aggregation mit weiteren Thrombozyten, vorliegt. In einer Ausführungsform ist unter dem Begriff "Thrombozyten-Objekt" eine Thrombozyten-Thrombozyten-Aggregation zu verstehen, die eine Vielzahl an Thrombozyten aufweist. In einer Ausführungsform ist unter dem Begriff "Thrombozyten-Objekt" ist eine Thrombozyten-Thrombozyten-Aggregation zu verstehen, die aus eine Vielzahl an Thrombozyten besteht.

Insbesondere ist die Methode dazu ausgebildet, ein Thrombozyten-Objekt zu detektieren und die Anzahl an Thrombozyten in dem Thrombozyten-Objekt zu bestimmen, wobei das Thrombozyten-Objekt ein Thrombozyt ist oder aus einer Vielzahl Thrombozyten besteht.

Die Probe weist Vollblut auf. In einer Ausführungsform besteht die Probe aus Vollblut. Vollblut ist insbesondere Blut, das sämtliche Bestandteile enthält, insbesondere sämtliche Blutbestandteile. Die Probe kann Erythrozyten, auch bekannt als rote Blutkörperchen, aufweisen.

Ein Vorteil an einer Probe, die Vollblut aufweist, ist, dass keine zusätzlichen Apparate für die Abtrennung von Blutbestandteilen notwendig sind. Es entsteht somit kein zusätzlicher Kostenfaktor. Ebenfalls vorteilhaft ist, dass so die Aggregation von Thrombozyten unter physiologischen Bedingungen untersucht werden kann, da die Zusammensetzung des Blutes nicht künstlich verändert wird. Eine Veränderung der Zusammensetzung des Blutes könnte die Fähigkeit der Thrombozyten Aggregationen zu bilden beeinflussen.

In einer Ausführungsform wird nur eine geringe Menge an Blut, insbesondere Vollblut, benötigt. In einer Ausführungsform ist die Menge kleiner als 100μl, insbesondere kleiner als 50μl, insbesondere 20μl. Die geringe Menge Blut kann vorteilhaft minimal invasiv erhalten werden.

Gemäß einer Ausführungsform kann die Blutprobe mit einem Antikörper, der mit einem Farbstoff verbunden ist, gefärbt werden. Dieser Schritt kann der Identifikation eines Thrombozyten dienen. Die Bindungsstelle des Antikörpers ist der Oberflächenrezeptor CD42b. Dieser Färbungsschritt kann eine 1:5 Verdünnung besitzen. Die Mischung aus Blut und Farbstoff kann zusätzlich in einem Lösungsmittel verdünnt werden. Gemäß einer Ausführungsform kann in einem Verhältnis 1:40 verdünnt werden. Das Lösungsmittel kann insbesondere phosphate-buffered saline (PBS) sein.

Es kann ein Bild aus der Probe aufgenommen werden. Das Bild kann insbesondere ein Thrombozyten-Objekt zeigen. Es kann eine Vielzahl von Bildern aus der Probe aufgenommen werden, wobei jedes Bild der Vielzahl an Bildern insbesondere ein jeweiliges Thrombozyten-Objekt zeigt.

Ein Durchflusszytometer kann ein Bild eines jeden Objektes erstellen, das sich an einem Objektiv des Durchflusszytometers vorbeibewegt. In einer Ausführungsform ist ein Durchflusszytometer für ein Hochdurchsatzverfahren ausgebildet. Eine Ausführungsform ist dadurch gekennzeichnet, dass das bildgebende Durchflusszytometer für jedes Thrombozyten-Objekt ein Bild erfasst. Das bildgebende Durchflusszytometer kann ein Mikroskop aufweisen. Insbesondere kann ein mikroskopisches Bild erfasst werden. Es kann ein mikroskopisches Bild eines Thrombozyten-Objektes erfasst werden.

Ein bildgebendes Durchflusszytometer kann ein bildgestütztes Durchflusszytometer sein.

In einer Ausführungsform wird das mindestens eine Bild formatiert und das entsprechende formatierte Bild dem trainierten Faltungsnetzwerk übermittelt. Das mindestens eine Bild kann beispielsweise eines der folgenden Formate aufweisen: ein "tagged image file format" (tif-Format), eine portable Netzwerkgrafik (png-Format) oder ein jpg-Format. In einer Ausführungsform hat das mindestens eine Bild ein 8-bit tif-Format, mit einer Größe von 60x60 Pixeln. Beim Formatierungsprozess kann das Bild in Graustufen eingelesen werden. Eine Vielzahl an Bildern kann auf eine einheitliche Größe formatiert werden. Nach einer Ausführungsform wird dazu jedes Bild der Vielzahl an Bildern auf einen jeweiligen Untergrund aufgesetzt, wobei der jeweilige Untergrund dieselbe Farbe des Hintergrundes des jeweiligen Bildes erhält, beispielsweise indem ein Mittelwert der Farbe aus den Pixeln einer ersten Zeile des Bildes bestimmt wird.

Gemäß einer Ausführungsform wird das Bild mithilfe einer Funktion bearbeitet, um eine Varianz zu reduzieren, wobei jedem Wert eines jeweiligen Pixels p ein transformierter Wert e(p) zugeordnet wird, wobei gilt:

$$e(p) = \frac{255\left(e^{3\frac{p}{255}} - \sin\left(\frac{p}{255}\right) - 1\right)}{e^3 - \sin(1) - 1}$$

Ein Faltungsnetzwerk wird im Rahmen dieser Anmeldung auch als convolutionales neuronales Netzwerk (CNN), oder als neuronales Netzwerk bezeichnet. Ein Faltungsnetzwerk kann auf einer Computervorrichtung ausgeführt werden.

Ein CNN kann aus einer Vielzahl aneinandergereihter, d. h. aufeinanderfolgender, Schichten bestehen. Eine Schichte kann eine Vielzahl Neuronen aufweisen.

Das trainierte Faltungsnetzwerk kann dazu trainiert sein auf dem mindestens einen Bild das Thrombozyten-Objekt zu erkennen. In einer Ausführungsform ist das trainierte Faltungsnetzwerk dazu eingerichtet, ein Thrombozyten-Objekt von einem anderen Blutbestandteil zu unterscheiden.

Ein untrainiertes Faltungsnetzwerk kann mithilfe von einer Vielzahl an Bildern von Thrombozyten-Objekten und einer Vielzahl an Bildern von anderen Blutbestandteilen, insbesondere Erythrozyten, darauf trainiert werden, die unterschiedlichen Blutbestandteile zu erkennen bzw. zu unterscheiden. Insbesondere kann das Faltungsnetzwerk derart trainiert werden, um ein Thrombozyten-Objekt zu erkennen. Das Faltungsnetzwerk kann dazu eingerichtet sein, ein Bild, das einen Erythrozyten zeigt, als ein Bild zu erkennen, das kein Thrombozyten-Objekt zeigt.

In einer Ausführungsform ist das trainierte Faltungsnetzwerk dazu trainiert, eine Anzahl von Thrombozyten in dem erkannten Thrombozyten-Objekt zu bestimmen und bei Bedarf auszugeben. Gemäß einer Ausführungsform ist das trainierte Faltungsnetzwerk dazu eingerichtet, das erkannte Thrombozyten-Objekt zu klassifizieren, insbesondere hinsichtlich der Anzahl der Thrombozyten in dem erkannten Thrombozyten-Objekt. Mit anderen Worten bedeutet das, dass das trainierte Faltungsnetzwerk dazu eingerichtet sein kann, das erkannte Thrombozyten-Objekt anhand der Anzahl von Thrombozyten in dem erkannten Thrombozyten-Objekt einer Klasse an Thrombozyten-Objekten zuzuordnen. Eine Klasse könnte beispielsweise die Klasse sein, in der sich alle Thrombozyten-Objekte bestehend aus zwei Thrombozyten befinden.

Das CNN ist eine Methode des "deep learnings". Unter dem Begriff "deep learning" ist eine Methode des maschinellen Lernens zu verstehen, bei der künstliche neuronale Netzwerke genutzt werden. Eine Methode des "deep learnings" kann zur Detektion und/oder Klassifikation einer Thrombozyten-Aggregation genutzt werden. Ferner kann ein Faltungsnetzwerk für die Detektion und/oder Klassifikation einer Thrombozyten-Aggregation genutzt werden. Mittels zusätzlicher Daten kann eine Sensitivität und/oder ein Genauigkeitsgrad der Methode gesteigert werden.

Das CNN kann selbständig ein Muster und/oder ein Merkmal erlernen. Das Faltungsnetzwerk kann selbstständig ein Muster und/oder ein Merkmal für die Detektion eines Thrombozyten-Objektes erlernen. Das Faltungsnetzwerk kann selbstständig ein Muster und/oder ein Merkmal für die Klassifizierung eines Thrombozyten-Objektes erlernen. Eine Objekterkennung kann multidimensional sein.

Ein Vorteil der Methode ist, dass ein Thrombozyten-Objekt genauer klassifiziert werden kann. Insbesondere kann die Anzahl von Thrombozyten im erkannten Thrombozyten-Objekt bestimmt werden. Ein Thrombozyten-Objekt kann anhand der Anzahl der Thrombozyten in dem Thrombozyten-Objekt einer vordefinierten Klasse zugeordnet werden. Dadurch können beispielsweise Thrombozyten-Aggregationen unterschiedlicher Größe, d. h. Thrombozyten-Aggregationen die unterschiedlich viele Thrombozyten aufweisen, unterschieden werden.

Die Bilder der Probe können mithilfe einer hochdurchsatz-fähigen bildgebenden Durchflusszytometrie ermittelt werden. Dies ergibt die weiteren Vorteile, dass die Methode eine hohe Geschwindigkeit der Untersuchung sowie eine hohe Präzision ermöglicht.

Ein untrainiertes Faltungsnetzwerk kann trainiert werden. Zum Trainieren eines untrainierten convolutionalen neuronales Netzwerkes, kann dem untrainierten convolutionalen neuralen Netzwerk eine Vielzahl von Bildern übermittelt werden, wobei jedes Bild der Vielzahl von Bildern mindestens ein jeweiliges Thrombozyten-Objekt zeigt, und wobei der jeweiligen Thrombozyten-Thrombozyten-Aggregation eine Anzahl von Thrombozyten in der jeweiligen Thrombozyten-Thrombozyten-Aggregation zugeordnet ist. Jedes Bild der Vielzahl von Bildern kann insbesondere mittels eines bildgebenden Durchflusszytometers erzeugt sein.

In einer Ausführungsform kann ein trainiertes Faltungsnetzwerk trainiert werden. Das trainierte Faltungsnetzwerk kann trainiert werden, um die Güte der Detektion und/oder Klassifikation weiter zu erhöhen. Zum Trainieren eines trainierten convolutionalen neuronales Netzwerkes, kann dem trainierten convolutionalen neuralen Netzwerk eine Vielzahl von Bildern übermittelt werden, wobei jedes Bild der Vielzahl von Bildern mindestens ein jeweiliges Thrombozyten-Objekt zeigt, und wobei der jeweiligen Thrombozyten-Thrombozyten-Aggregation eine Anzahl von Thrombozyten in der jeweiligen Thrombozyten-Thrombozyten-Aggregation zugeordnet ist.

Eine Zuordnung kann insbesondere für Thrombozyten-Aggregationen, die aus weniger als vier Thrombozyten bestehen, präzise erfolgen. Thrombozyten-Aggregationen mit mindestens vier Thrombozyten sind räumlich so groß, dass ein Betrachter keine genaue Unterscheidung vornehmen kann, da sich Thrombozyten räumlich überlagern. Ein Training, das Unterscheidungen von Thrombozyten-Aggregationen mit mehr als vier Thrombozyten umfassen würde, könnte aufgrund der unsicheren Zuordnung eine Trainingsunsicherheit hervorrufen.

Experimente zeigen, dass für eine Charakterisierung der Gerinnungseigenschaften die Klassifizierung der Thrombozyten-Objekte mit einem, zwei, drei oder mindestens vier Thrombozyten ausreichend ist. Eine Berücksichtigung von Thrombozyten-Aggregationen mit genau vier Thrombozyten würde die Unsicherheit des Trainings erhöhen, jedoch keinen Gewinn an diagnostischen Informationen liefern.

Das Faltungsnetzwerk wurde daher insbesondere zur Detektion und Klassifizierung von Thrombozyten-Objekten mit einem, zwei, drei oder mindestens vier Thrombozyten trainiert. Mit anderen Worten wurde das Faltungsnetzwerk insbesondere zur Detektion und Klassifizierung von Thrombozyten-Objekten eingerichtet, die unter physiologischen Bedingungen im menschlichen Körper, insbesondere im menschlichen Blutfluss, auftreten.

Vorteilhaft ist, dass die Methode zur Detektion und Klassifizierung von Thrombozyten-Objekten unter physiologischen Bedingungen eingerichtet ist. Das bedeutet, dass anhand der Klassifizierungen der Thrombozyten-Objekte Rückschlüsse auf die momentane Gerinnungsfähigkeit gezogen werden können. Unter physiologischen Bedingungen liegen im menschlichen Körper insbesondere Thrombozyten-Aggregationen vor, die aus einem Thrombozyten, aus zwei Thrombozyten oder aus drei Thrombozyten bestehen. Die Methode ist derart eingerichtet, dass nicht eine maximale Gerinnungsfähigkeit betrachtet werden muss. Die maximale Gerinnungsfähigkeit gibt die Gerinnung nach der Zugabe eines Agonisten an, der die Bildung von Thrombozyten-Aggregationen künstlich aktiviert, insbesondere künstlich erhöht. Die maximale Gerinnungsfähigkeit gibt keine direkten Informationen der Gerinnungsfähigkeit unter physiologischen Bedingungen. Das bedeutet, dass die erfindungsgemäße Methode dazu eingerichtet ist, die Thrombozyten-Aggregationen zu detektieren und klassifizieren, wie sie im menschlichen Körper vorkommen und nicht so, wie sie nach einer Zugabe eines Agonisten künstlich vorliegen könnten.

Ein weiterer Vorteil ist, dass die Thrombozyten-Thrombozyten-Aggregationen einzeln detektiert und klassifiziert werden. Das bedeutet, dass jede Thrombozyten-Thrombozyten-Aggregation lokal betrachtet wird und nicht allein eine globale Messung der Gerinnungsfähigkeit erfolgt.

Die Methode ist dazu eingerichtet, Thrombozyten-Objekte von anderen Bestandteilen des Blutes zu unterscheiden.

Das CNN wird trainiert, indem die vom CNN bestimmte jeweilige Anzahl der Thrombozyten in den Thrombozyten-Objekten mit der zugeordneten Anzahl von Thrombozyten in der jeweiligen Thrombozyten-Thrombozyten-Aggregation verglichen wird.

Dabei kann einzeln für jedes Bild ein Fehler ermittelt werden. Insbesondere ist mit einem Fehler gemeint, dass die vom Faltungsnetzwerk bestimmte Anzahl der Thrombozyten in der Thrombozyten-Thrombozyten-Aggregation von der zugeordneten Anzahl von Thrombozyten in der jeweiligen Thrombozyten-Thrombozyten-Aggregation abweicht. Nach einer ausgewählten Anzahl von Bildern können die Gewichte des neuronalen Netzwerkes angepasst werden. Der Fehler kann durch die kategorische Kreuzentropie ermittelt werden. Das CNN kann für eine Vielzahl von Epochen trainiert werden. In einer Ausführungsform wird das CNN für 50 Epochen trainiert, d. h. dass für das Training 50 Mal ein gesamter Datensatz genutzt wird.

Für das Training kann ein Optimierer genutzt werden. In einer Ausführungsform kann ein Optimierer ein Algorithmus zur Gewichtsanpassung anhand des Fehlers sein. Der Optimierer kann ein Optimierer mit einem Gradientenverfahren sein. In einer Ausführungsform weist der Optimierer ein beschleunigtes Nesterov Gradientenverfahren auf. In einer Ausführungsform ist der Optimierer ein Nadam-Verfahren.

Das trainierte CNN kann an einer weiteren Vielzahl an Bildern validiert werden. Eine Güte des trainierten CNN kann ermittelt werden mithilfe einer Genauigkeit und einer gemittelten Sensitivität. Die Güte kann ein Maß für die korrekte Bestimmung der Anzahl der Thrombozyten in einer Thrombozyten-Aggregation sein.

In einer Ausführungsform ist die Genauigkeit $a_m$ die Summe aller korrekten Bestimmungen $m_i$ der Anzahl an Thrombozyten in einer Thrombozyten-Aggregation i bezogen auf die Anzahl aller Bilder N.

$$a_m = \frac{m_1 + m_2 + \cdots + m_i}{N} = \frac{1}{N} \sum_{k=1}^{i} m_k$$

In einer Ausführungsform ist die gemittelte Sensitivität ä der Mittelwert aus den korrekten Bestimmungen $m_i$ je Gesamtanzahl $N_i$ der Bilder der jeweiligen Anzahl an Thrombozyten in einer Thrombozyten-Aggregation i.

$$\bar{a}_m = \frac{1}{i}\left(\frac{m_1}{N_1} + \frac{m_2}{N_2} + \cdots + \frac{m_i}{N_i}\right) = \frac{1}{i} \sum_{k=1}^{i} \frac{m_k}{N_k}$$

In einer Ausführungsform ist das trainierte Faltungsnetzwerk dazu ausgebildet, die Anzahl von Thrombozyten in dem erkannten Thrombozyten-Objekt zu bestimmen und bei Bedarf auszugeben, wenn die Anzahl der Thrombozyten in dem erkannten Thrombozyten-Objekt eins ist.

Das bedeutet, dass das trainierte Faltungsnetzwerk dazu ausgebildet, d. h. trainiert, ist, einen Thrombozyten zu erkennen, der nicht in einer Aggregation mit anderen Thrombozyten vorliegt. Mit anderen Worten, kann das trainierte CNN einen einzelnen, nicht-aggregierten Thrombozyten erkennen und bestimmen, dass die Anzahl der Thrombozyten in dem erkannten Thrombozyten-Objekt eins ist.

Die Methode kann dazu eingerichtet sein, die Anzahl der Thrombozyten, die das Thrombozyten-Objekt aufweist, genau zu bestimmen, wenn die Anzahl eins ist.

Der Vorteil ist, dass mithilfe der Methode Thrombozyten, die nicht in einer Aggregation vorliegen, detektiert und entsprechend bestimmt werden.

In einer Ausführungsform ist das trainierte convolutionale neuronale Netzwerk zur Unterscheidung eines Thrombozyten gegenüber einem anderen Blutbestandteil, insbesondere einem Erythrozyten, ausgebildet.

Nach einer Ausführungsform ist das trainierte Faltungsnetzwerk dazu ausgebildet, die Anzahl von Thrombozyten in dem erkannten Thrombozyten-Objekt zu bestimmen und bei Bedarf auszugeben, wenn die Anzahl der Thrombozyten in dem erkannten Thrombozyten-Objekt zwei ist.

Das trainierte Faltungsnetzwerk kann dazu ausgebildet, d. h. trainiert, sein, eine Thrombozyten-Aggregation zu erkennen, die zwei Thrombozyten aufweist oder aus zwei Thrombozyten besteht. Das trainierte CNN kann dazu ausgebildet sein, die Anzahl der Thrombozyten in der Thrombozyten-Thrombozyten-Aggregation zu bestimmen und bei Bedarf auszugeben, wenn die Anzahl der Thrombozyten in dem erkannten Thrombozyten-Objekt zwei ist.

Nach einer Ausführungsform ist das trainierte Faltungsnetzwerk dazu ausgebildet, die Anzahl von Thrombozyten in dem erkannten Thrombozyten-Objekt zu bestimmen und bei Bedarf auszugeben, wenn die Anzahl der Thrombozyten in dem erkannten Thrombozyten-Objekt drei ist.

Das trainierte Faltungsnetzwerk kann dazu ausgebildet, d. h. trainiert, sein, eine Thrombozyten-Aggregation zu erkennen, die drei Thrombozyten aufweist oder aus drei Thrombozyten besteht Das trainierte CNN kann dazu ausgebildet sein, die Anzahl der Thrombozyten in der Thrombozyten-Thrombozyten-Aggregation zu bestimmen und bei Bedarf auszugeben, wenn die Anzahl der Thrombozyten in dem erkannten Thrombozyten-Objekt drei ist.

In einer Ausführungsform ist das trainierte Faltungsnetzwerk zu einer Klassifikation des erkannten Thrombozyten-Objektes anhand der Anzahl an Thrombozyten in dem erkannten Thrombozyten-Objekt (insbesondere der erkannten Thrombozyten-Thrombozyten-Aggregation) ausgebildet.

Mit anderen Worten kann eine Klassifikation von einer Thrombozyten-Thrombozyten-Aggregation anhand der Anzahl von Thrombozyten, aus der die jeweiligen Thrombozyten-Thrombozyten-Aggregation bestehen, erfolgen. Mit anderen Worten kann eine Klassifikation von Thrombozyten-Thrombozyten-Aggregation anhand ihrer Größen erfolgen.

Mittels der Methode kann ein Thrombozyten-Objekt detektiert werden und dessen Thrombozyten-Anzahl, d. h. die Anzahl der Thrombozyten in dem jeweiligen Thrombozyten-Objekt, bestimmt werden, das zwei Thrombozyten aufweist oder aus zwei Thrombozyten besteht. Mittels der Methode kann ein Thrombozyten-Objekt detektiert werden und dessen Thrombozyten-Anzahl bestimmt werden, das drei Thrombozyten aufweist oder aus drei Thrombozyten besteht. Das bedeutet, dass vorteilhaft eine Thrombozyten-Aggregation, die eine geringe Anzahl an Thrombozyten aufweist, nämlich zwei oder drei Thrombozyten, detektiert werden kann und deren Thrombozyten-Anzahl bestimmt werden kann.

Mit anderen Worten bedeutet das, dass eine kleine Thrombozyten-Thrombozyten-Aggregation, d. h. eine Thrombozyten-Aggregation aus einer geringen Anzahl von Thrombozyten (insbesondere bestehend aus zwei oder drei Thrombozyten), detektiert werden kann und deren Anzahl an Thrombozyten bestimmt werden kann. Vorteilhaft können Thrombozyten-Aggregationen aus einer geringen Anzahl von Thrombozyten, die nicht in einer Aggregation vorliegen, unterschieden werden. Das bedeutet, dass mittels der Methode eine kleine Thrombozyten-Thrombozyten-Aggregation von einem nicht-aggregierten Thrombozyten unterscheidbar ist. Mithilfe der Methode ist eine Thrombozyten-Thrombozyten-Aggregation bestehen aus zwei Thrombozyten von einem nicht-aggregierten einzelnen Thrombozyten unterscheidbar. Mithilfe der Methode ist eine Thrombozyten-Thrombozyten-Aggregation bestehen aus drei Thrombozyten von einem nicht-aggregierten einzelnen Thrombozyten unterscheidbar.

Ferner kann die Methode dazu eingerichtet sein, zwischen zwei Thrombozyten-Aggregationen zu unterscheiden, wobei sich die zwei Thrombozyten-Aggregationen in der Anzahl ihrer Thrombozyten unterscheiden. Insbesondere kann eine Thrombozyten-Aggregation bestehend aus zwei

Thrombozyten von einer Thrombozyten-Aggregation bestehend aus drei Thrombozyten unterschieden werden. Mithilfe des trainierten convolutionalen neuronalen Netzwerkes können kleine Thrombozyten-Aggregationen unterschieden werden. Ferner kann eine kleine Thrombozyten-Aggregation von einem nicht-aggregierten Thrombozyten unterschieden werden.

Die Methode kann dazu ausgebildet sein, die Anzahl der Thrombozyten, die das Thrombozyten-Objekt aufweist, genau zu bestimmen, wenn die Anzahl zwei ist. Die Methode kann dazu eingerichtet sein, die Anzahl der Thrombozyten, aus denen das Thrombozyten-Objekt besteht, genau zu bestimmen, wenn die Anzahl zwei ist.

Die Methode kann dazu ausgebildet sein, die Anzahl der Thrombozyten, die das Thrombozyten-Objekt aufweist, genau zu bestimmen, wenn die Anzahl drei ist. Die Methode kann dazu eingerichtet sein, die Anzahl der Thrombozyten, aus denen das Thrombozyten-Objekt besteht, genau zu bestimmen, wenn die Anzahl drei ist.

Die Methode kann dazu eingerichtet sein, dass mithilfe eines trainierten Faltungsnetzwerkes eine kleine Thrombozyten-Aggregation mit einer ersten ausgewählten Anzahl von Thrombozyten (z. B. zwei) von einer anderen kleinen Thrombozyten-Aggregation mit einer zweiten ausgewählten Anzahl von Thrombozyten (z. B. drei) unterschieden werden kann. Das trainierte Faltungsnetzwerk kann derart ausgebildet sein, trotz fließender Unterschiede zwischen kleinen Thrombozyten-Aggregationen mit einer ersten ausgewählten Anzahl von Thrombozyten (z. B. zwei) und anderen kleinen Thrombozyten-Aggregationen mit einer zweiten ausgewählten Anzahl von Thrombozyten (z. B. drei) zu unterscheiden.

Die Methode kann dazu eingerichtet sein, Thrombozyten-Aggregationen mit einer physiologischen Größe, d.

h. Thrombozyten-Aggregationen mit einer Anzahl von Thrombozyten, wie sie unter physiologischen Bedingungen auftritt, zu detektieren und die Anzahl von Thrombozyten in den Thrombozyten-Aggregationen zu bestimmen (d. h. mit anderen Worten die Größe der Thrombozyten-Aggregationen zu bestimmen). Vorteilhaft ist die Methode dazu eingerichtet, Thrombozyten-Aggregationen mit einer physiologischen Größe zu detektieren, so dass für die Detektion eine sogenannte Maximalaktivierung der Thrombozyten nicht notwendig ist. Nach der Maximalaktivierung wird die maximal mögliche Aggregation von Thrombozyten vermessen. Mithilfe der Maximalaktivierung entstehen große Thrombozyten-Aggregationen, insbesondere Thrombozyten-Aggregationen, die aus mehr als zehn Thrombozyten bestehen. Dies lässt jedoch keine direkten Rückschlüsse auf die physiologische Aggregation zu. Im menschlichen Körper treten Thrombozyten-Objekte insbesondere mit einer Anzahl von eins bis drei Thrombozyten auf. Thrombozyten-Aggregationen mit vier oder mehr Thrombozyten treten unter physiologischen Bedingungen selten auf. Insbesondere treten Thrombozyten-Aggregationen, die aus mehr als zehn Thrombozyten bestehen, unter physiologischen Bedingungen selten auf, so dass ihre Detektion unter physiologischen Bedingungen eine geringe Relevanz hat.

Das trainierte Faltungsnetzwerk kann insbesondere dazu ausgebildet sein, kleine Thrombozyten-Aggregationen bestehend aus zwei Thrombozyten zu detektieren. Das trainierte Faltungsnetzwerk kann insbesondere dazu ausgebildet sein, kleine Thrombozyten-Aggregationen bestehend aus drei Thrombozyten zu detektieren.

Damit wird vorteilhaft eine Methode zur Verfügung gestellt, mit der eine Thrombozyten-Aggregation erkannt und anhand der Anzahl an Thrombozyten klassifiziert wird. Unter physiologischen Bedingungen treten im menschlichen Körper insbesondere einzelne Thrombozyten, Thrombozyten-Aggregationen bestehend aus zwei Thrombozyten und/oder Thrombozyten-Aggregationen bestehend aus drei Thrombozyten auf. Deren Detektion sowie eine korrekte und zuverlässige Bestimmung der Anzahl an Thrombozyten in den jeweiligen Thrombozyten-Aggregationen, d. h. eine Klassifikation der Thrombozyten-Aggregation anhand der Anzahl an Thrombozyten in der Thrombozyten-Aggregation, ist für eine genaue Charakterisierung der Gerinnungseigenschaften des Blutes entscheidend und durch die Methode vorteilhaft gegeben.

Die Methode ist dazu eingerichtet, Thrombozyten-Aggregationen mit einer physiologischen Größe, d. h. Thrombozyten-Aggregationen mit einer Anzahl von Thrombozyten, wie sie unter physiologischen Bedingungen auftritt, zu detektieren und die Anzahl von Thrombozyten in den Thrombozyten-Aggregationen zu bestimmen (d. h. mit anderen Worten die Größe der Thrombozyten-Aggregationen zu bestimmen). Vorteilhaft ist die Methode dazu eingerichtet, Thrombozyten-Aggregationen mit einer physiologischen Größe zu detektiert, so dass für die Detektion eine sogenannte Maximalaktivierung der Thrombozyten nicht notwendig ist. Nach der Maximalaktivierung wird die maximal mögliche Aggregation von Thrombozyten vermessen. Dies lässt jedoch keine direkten Rückschlüsse auf die physiologische Aggregation zu.

Nach einer Ausführungsform ist das trainierte Faltungsnetzwerk dazu ausgebildet, die Anzahl von Thrombozyten in dem erkannten Thrombozyten-Objekt zu bestimmen und bei Bedarf auszugeben, wenn die Anzahl der Thrombozyten in dem erkannten Thrombozyten-Objekt mindestens vier ist.

Das trainierte Faltungsnetzwerk kann dazu ausgebildet, insbesondere trainiert, sein, eine Thrombozyten-Aggregation zu erkennen, die mindestens Thrombozyten aufweist oder aus mindestens vier Thrombozyten besteht.

In einer Ausführungsform ist das trainierte CNN dazu eingerichtet zu bestimmen, dass die Anzahl der Thrombozyten mindestens vier ist.

In einer Ausführungsform ist das trainierte Faltungsnetzwerk zu einer Klassifikation des erkannten Thrombozyten-Objektes anhand der Anzahl an Thrombozyten in dem erkannten Thrombozyten-Objekt (insbesondere der erkannten Thrombozyten-Thrombozyten-Aggregation) ausgebildet. Insbesondere ist das trainierte Faltungsnetzwerk dazu eingerichtet, ein Thrombozyten-Objekt, das mindestens vier Thrombozyten aufweist oder aus mindestens vier Thrombozyten besteht, als eine Thrombozyten-Thrombozyten-Aggregation aufweisend mindestens vier Thrombozyten zu klassifizieren.

Mithilfe der Methode kann ein einzelner Thrombozyt von einer Thrombozyten-Aggregation unterschieden werden, die aus mindestens vier Thrombozyten besteht. Mithilfe der Methode kann eine Thrombozyten-Aggregation, die aus zwei Thrombozyten besteht, von einer Thrombozyten-Aggregation unterschieden werden, die aus mindestens vier Thrombozyten besteht. Mithilfe der Methode kann eine Thrombozyten-Aggregation, die aus drei Thrombozyten besteht, von einer Thrombozyten-Aggregation unterschieden werden, die aus mindestens vier Thrombozyten besteht.

Gemäß einer Ausführungsform wird für eine Vielzahl an Thrombozyten-Objekten der Probe eine Häufigkeit von einem Thrombozyten-Objekt mit einer bestimmten Anzahl an Thrombozyten bestimmt.

Gemäß einer Ausführungsform wird für eine Vielzahl an Thrombozyten-Objekten der Probe für mindestens eine Klasse an Thrombozyten-Objekten eine Häufigkeit bestimmt. Insbesondere kann die Methode dazu eingerichtet sein, für jede Klasse an Thrombozyten-Objekten eine jeweilige Häufigkeit zu bestimmen.

Eine Klasse an Thrombozyten-Objekten weist die Thrombozyten-Objekte mit einer identischen Anzahl an Thrombozyten in dem Thrombozyten-Objekt auf. Eine erste Klasse an Thrombozyten-Objekten, ist die Klasse, in der sich alle Thrombozyten-Objekte bestehend aus einem Thrombozyten befinden. Eine zweite Klasse an Thrombozyten-Objekten, ist die Klasse, in der sich alle Thrombozyten-Objekte bestehend aus zwei Thrombozyten befinden. Eine dritte Klasse an Thrombozyten-Objekten, ist die Klasse, in der sich alle Thrombozyten-Objekte bestehend aus drei Thrombozyten befinden. Eine vierte Klasse an Thrombozyten-Objekten, ist die Klasse, in der sich alle Thrombozyten-Objekte bestehend aus mindestens vier Thrombozyten befinden.

Für eine Vielzahl von erkannten Thrombozyten-Objekten der Probe kann die jeweilige Anzahl von Thrombozyten in dem jeweiligen erkannten Thrombozyten-Objekt bestimmt werden. Dabei kann für jede Anzahl von Thrombozyten (in der Aggregation) eine jeweilige Häufigkeit bestimmt werden, die angibt, wie häufig die jeweilige Anzahl von Thrombozyten in der Probe vorliegen. Die Methode kann dazu eingerichtet sein, zu zählen, wie viele Thrombozyten-Objekten einer bestimmten Klasse in einer Probe vorliegen.

In einer Ausführungsform wird für eine Vielzahl an Thrombozyten-Objekten bestimmt, wie viele Thrombozyten-Objekte einzelne (nicht-aggregierte) Thrombozyten sind. Mit anderen Worten bedeutet das, dass bestimmt werden kann, insbesondere gezählt werden kann, wie viele Thrombozyten-Objekte der ersten Klasse zugeordnet sind. Für eine Vielzahl an Thrombozyten-Objekten kann bestimmt werden, wie viele Thrombozyten-Objekte Thrombozyten-Aggregationen bestehend aus zwei Thrombozyten sind. Mit anderen Worten bedeutet das, dass bestimmt werden kann, insbesondere gezählt werden kann, wie viele Thrombozyten-Objekte der zweiten Klasse zugeordnet sind. Für eine Vielzahl an Thrombozyten-Objekten kann bestimmt werden, wie viele Thrombozyten-Objekte Thrombozyten-Aggregationen bestehend aus drei Thrombozyten sind. Mit anderen Worten bedeutet das, dass bestimmt werden kann, insbesondere gezählt werden kann, wie viele Thrombozyten-Objekte der dritten Klasse zugeordnet sind. Für eine Vielzahl an Thrombozyten-Objekten kann bestimmt werden, wie viele Thrombozyten-Objekte der Vielzahl an Thrombozyten-Objekten Thrombozyten-Aggregationen bestehend aus mindestens vier Thrombozyten sind. Mit anderen Worten bedeutet das, dass bestimmt werden kann, insbesondere gezählt werden kann, wie viele Thrombozyten-Objekte der vierten Klasse zugeordnet sind.

Eine Häufigkeitsverteilung kann ermittelt werden. Die Häufigkeitsverteilung kann ausgegeben werden. Insbesondere kann eine Häufigkeitsverteilung angegeben werden, die jeweils eine Anzahl angibt, wie viele der erkannten Thrombozyten-Objekte aus einem Thrombozyten bestehen, aus zwei Thrombozyten bestehen, aus drei Thrombozyten bestehen oder aus mindestens vier Thrombozyten bestehen. Eine Häufigkeitsverteilung kann angegeben werden, die angibt, wie viele Thrombozyten-Objekte der ersten Klasse, der zweiten Klasse, der dritten Klasse oder der vierten Klasse zugeordnet sind.

Ein statistisches Charakteristikum der Häufigkeitsverteilung kann ermittelt werden. Das statistische Charakteristikum kann ausgegeben werden.

Die Häufigkeit, wie häufig ein Thrombozyten-Objekt mit einer Anzahl von einem Thrombozyten vorliegt, wird im Rahmen dieser Anmeldung im Folgenden auch als Häufigkeit $m_1$ bezeichnet. Die Häufigkeit $m_1$ gibt die Anzahl von Thrombozyten-Objekten mit einer Anzahl von einem Thrombozyten an. Mit anderen Worten bedeutet das, dass die Häufigkeit $m_1$ die Zahl an Thrombozyten-Objekten der ersten Klasse angibt. Mit anderen Worten kann die Häufigkeit $m_1$ die Mächtigkeit der ersten Klasse angeben.

Es kann eine relative Häufigkeit bestimmt werden. Die relative Häufigkeit, wie häufig ein Thrombozyten-Objekt mit einer Anzahl von einem Thrombozyten bezogen auf eine Anzahl aller erfassten Thrombozyten-Objekte der Probe (N) vorliegt, wird im Rahmen dieser Anmeldung im Folgenden auch als relative Häufigkeit $h_1$ bezeichnet. Die relative Häufigkeit $h_1$ kann bestimmt werden nach der Formel

$$h_1 = \frac{m_1}{N}.$$

Die relative Häufigkeit $h_1$ kann den Anteil an Thrombozyten-Objekt der ersten Klasse bezogen auf die Gesamtheit aller erfassten Thrombozyten-Objekte der Probe (N) angeben.

Die Häufigkeit, wie häufig ein Thrombozyten-Objekt mit einer Anzahl von zwei Thrombozyten vorliegt, wird im Rahmen dieser Anmeldung im Folgenden auch als Häufigkeit $m_2$ bezeichnet. Die Häufigkeit $m_2$ gibt die Anzahl von Thrombozyten-Objekten mit einer Anzahl von zwei Thrombozyten an. Mit anderen Worten bedeutet das, dass die Häufigkeit $m_2$ die Zahl an Thrombozyten-Objekten der zweiten Klasse angibt. Mit anderen Worten kann die Häufigkeit $m_2$ die Mächtigkeit der zweiten Klasse angeben.

Die relative Häufigkeit, wie häufig ein Thrombozyten-Objekt mit einer Anzahl von zwei Thrombozyten bezogen auf eine Anzahl aller erfassten Thrombozyten-Objekte der Probe (N) vorliegt, wird im Rahmen dieser Anmeldung im Folgenden auch als relative Häufigkeit $h_2$ bezeichnet. Die relative Häufigkeit $h_2$ kann bestimmt werden nach der Formel

$$h_2 = \frac{m_2}{N}.$$

Die relative Häufigkeit $h_2$ kann den Anteil an Thrombozyten-Objekt der zweiten Klasse bezogen auf die Gesamtheit aller erfassten Thrombozyten-Objekte der Probe (N) angeben.

Die Häufigkeit, wie häufig ein Thrombozyten-Objekt mit einer Anzahl von drei Thrombozyten vorliegt, wird im Rahmen dieser Anmeldung im Folgenden auch als Häufigkeit $m_3$ bezeichnet. Die Häufigkeit $m_3$ gibt die Anzahl von Thrombozyten-Objekten mit einer Anzahl von drei Thrombozyten an. Mit anderen Worten bedeutet das, dass die Häufigkeit $m_3$ die Zahl an Thrombozyten-Objekten der dritten Klasse angibt. Mit anderen Worten kann die Häufigkeit $m_3$ die Mächtigkeit der dritten Klasse angeben.

Die relative Häufigkeit, wie häufig ein Thrombozyten-Objekt mit einer Anzahl von drei Thrombozyten bezogen auf eine Anzahl aller erfassten Thrombozyten-Objekte der Probe (N) vorliegt, wird im Rahmen dieser Anmeldung im Folgenden auch als relative Häufigkeit $h_3$ bezeichnet. Die relative Häufigkeit $h_3$ kann bestimmt werden nach der Formel

$$h_3 = \frac{m_3}{N}.$$

Die relative Häufigkeit $h_3$ kann den Anteil an Thrombozyten-Objekt der dritten Klasse bezogen auf die Gesamtheit aller erfassten Thrombozyten-Objekte der Probe (N) angeben.

Die Häufigkeit, wie häufig ein Thrombozyten-Objekt mit einer Anzahl von mindestens vier Thrombozyten vorliegt, wird im Rahmen dieser Anmeldung im Folgenden auch als Häufigkeit $m_4$ bezeichnet. Die Häufigkeit $m_4$ gibt die Anzahl von Thrombozyten-Objekten mit einer Anzahl von mindestens vier Thrombozyten an. Mit anderen Worten bedeutet das, dass die Häufigkeit $m_4$ die Zahl an Thrombozyten-Objekten der vierten Klasse angibt. Mit anderen Worten kann die Häufigkeit $m_4$ die Mächtigkeit der vierten Klasse angeben.

Die relative Häufigkeit, wie häufig ein Thrombozyten-Objekt mit einer Anzahl von mindestens vier Thrombozyten bezogen auf eine Anzahl aller erfassten Thrombozyten-Objekte der Probe (N) vorliegt, wird im Rahmen dieser Anmeldung im Folgenden auch als relative Häufigkeit $h_4$ bezeichnet. Die relative Häufigkeit $h_4$ kann bestimmt werden nach der Formel

$$h_4 = \frac{m_4}{N}.$$

Die relative Häufigkeit $h_4$ kann den Anteil an Thrombozyten-Objekt der vierten Klasse bezogen auf die Gesamtheit aller erfassten Thrombozyten-Objekte der Probe (N) angeben.

Eine Ausführungsform ist dadurch gekennzeichnet, dass ein gewichteter Diagnosewert bestimmt wird, wobei der gewichtete Diagnosewert mindestens eine Häufigkeit eines Thrombozyten-Objektes aufweist.

Gemäß einer Ausführungsform wird der gewichtete Diagnosewert ausgegeben.

In einer Ausführungsform weist der gewichtete Diagnosewert mindestens eine relative Häufigkeit auf.

In eine Ausführungsform weist der gewichtete Diagnosewert die Häufigkeiten des Thrombozyten-Objektes mit der Anzahl von zwei Thrombozyten auf.

Gemäß einer Ausführungsform weist der gewichtete Diagnosewert die Mächtigkeit der zweiten Klasse auf.

Nach einer Ausführungsform weist der gewichtete Diagnosewert die Häufigkeiten des Thrombozyten-Objektes mit der Anzahl von drei Thrombozyten auf.

Gemäß einer Ausführungsform weist der gewichtete Diagnosewert die Mächtigkeit der dritten Klasse auf.

Gemäß einer Ausführungsform weist der gewichtete Diagnosewert die Häufigkeiten des Thrombozyten-Objektes mit der Anzahl von mindestens vier Thrombozyten auf.

Gemäß einer Ausführungsform weist der gewichtete Diagnosewert die Mächtigkeit der vierten Klasse auf.

In einer Ausführungsform weist der gewichtete Diagnosewert die Häufigkeiten des Thrombozyten-Objektes mit der Anzahl von einem Thrombozyten auf.

Gemäß einer Ausführungsform weist der gewichtete Diagnosewert die Mächtigkeit der ersten Klasse auf.

Die jeweilige Häufigkeit kann die jeweilige relative Häufigkeit sein.

Der gewichtete Diagnosewert kann einen Anteil von Thrombozyten-Aggregationen mit mindestens zwei Thrombozyten, quantifizieren, wobei die Thrombozyten-Aggregationen nach der Anzahl der Thrombozyten im Thrombozyten-Objekt unterteilt sind.

In einer Ausführungsform weist der gewichtete Diagnosewert die Häufigkeit des Thrombozyten-Objektes mit der Anzahl von einem Thrombozyten und die Häufigkeit des Thrombozyten-Objektes mit der Anzahl von zwei Thrombozyten auf.

Nach einer Ausführungsform weist der gewichtete Diagnosewert die Mächtigkeit der ersten Klasse sowie die Mächtigkeit der zweiten Klasse auf.

In einer Ausführungsform weist der gewichtete Diagnosewert die Häufigkeit des Thrombozyten-Objektes mit der Anzahl von einem Thrombozyten und die Häufigkeit des Thrombozyten-Objektes mit der Anzahl von drei Thrombozyten auf.

Nach einer Ausführungsform weist der gewichtete Diagnosewert die Mächtigkeit der ersten Klasse sowie die Mächtigkeit der dritten Klasse auf.

In einer Ausführungsform weist der gewichtete Diagnosewert die Häufigkeit des Thrombozyten-Objektes mit der Anzahl von einem Thrombozyten und die Häufigkeit des Thrombozyten-Objektes mit der Anzahl von mindestens vier Thrombozyten auf.

Nach einer Ausführungsform weist der gewichtete Diagnosewert die Mächtigkeit der ersten Klasse sowie die Mächtigkeit der vierten Klasse auf.

In einer Ausführungsform weist der gewichtete Diagnosewert die Häufigkeit des Thrombozyten-Objektes mit der Anzahl von zwei Thrombozyten und die Häufigkeit des Thrombozyten-Objektes mit der Anzahl von drei Thrombozyten auf.

Nach einer Ausführungsform weist der gewichtete Diagnosewert die Mächtigkeit der zweiten Klasse sowie die Mächtigkeit der dritten Klasse auf.

In einer Ausführungsform weist der gewichtete Diagnosewert die Häufigkeit des Thrombozyten-Objektes mit der Anzahl von zwei Thrombozyten und die Häufigkeit des Thrombozyten-Objektes mit der Anzahl von mindestens vier Thrombozyten auf.

Nach einer Ausführungsform weist der gewichtete Diagnosewert die Mächtigkeit der zweiten Klasse sowie die Mächtigkeit der vierten Klasse auf.

In einer Ausführungsform weist der gewichtete Diagnosewert die Häufigkeit des Thrombozyten-Objektes mit der Anzahl von drei Thrombozyten und die Häufigkeit des Thrombozyten-Objektes mit der Anzahl von mindestens vier Thrombozyten auf.

Nach einer Ausführungsform weist der gewichtete Diagnosewert die Mächtigkeit der dritten Klasse sowie die Mächtigkeit der vierten Klasse auf.

In einer Ausführungsform weist der gewichtete Diagnosewert die Häufigkeit des Thrombozyten-Objektes mit der Anzahl von einem Thrombozyten, die Häufigkeit des Thrombozyten-Objektes mit der Anzahl von zwei Thrombozyten und die Häufigkeit des Thrombozyten-Objektes mit der Anzahl von drei Thrombozyten auf.

Nach einer Ausführungsform weist der gewichtete Diagnosewert die Mächtigkeit der ersten Klasse, die Mächtigkeit der zweiten Klasse sowie die Mächtigkeit der dritten Klasse auf.

In einer Ausführungsform weist der gewichtete Diagnosewert die Häufigkeit des Thrombozyten-Objektes mit der Anzahl von einem Thrombozyten, die Häufigkeit des Thrombozyten-Objektes mit der Anzahl von drei Thrombozyten und die Häufigkeit des Thrombozyten-Objektes mit der Anzahl von mindestens vier Thrombozyten auf.

Nach einer Ausführungsform weist der gewichtete Diagnosewert die Mächtigkeit der ersten Klasse, die Mächtigkeit der dritten Klasse sowie die Mächtigkeit der vierten Klasse auf.

In einer Ausführungsform weist der gewichtete Diagnosewert die Häufigkeit des Thrombozyten-Objektes mit der Anzahl von zwei Thrombozyten, die Häufigkeit des Thrombozyten-Objektes mit der Anzahl von drei Thrombozyten und die Häufigkeit des Thrombozyten-Objektes mit der Anzahl von mindestens vier Thrombozyten auf.

Nach einer Ausführungsform weist der gewichtete Diagnosewert die Mächtigkeit der zweiten Klasse, die Mächtigkeit der dritten Klasse sowie die Mächtigkeit der vierten Klasse auf.

In einer Ausführungsform weist der gewichtete Diagnosewert die Häufigkeit des Thrombozyten-Objektes mit der Anzahl von einem Thrombozyten ($m_1$), die Häufigkeit des Thrombozyten-Objektes mit der Anzahl von zwei Thrombozyten ($m_2$), die Häufigkeit des Thrombozyten-Objektes mit der Anzahl von drei Thrombozyten ($m_3$) und die Häufigkeit des Thrombozyten-Objektes mit der Anzahl von mindestens vier Thrombozyten ($m_4$) auf.

Nach einer Ausführungsform weist der gewichtete Diagnosewert die Mächtigkeit der ersten Klasse, die Mächtigkeit der zweiten Klasse, die Mächtigkeit der dritten Klasse sowie die Mächtigkeit der vierten Klasse auf.

In einer Ausführungsform weist der gewichtete Diagnosewert ein erstes Gewicht ($g_1$) auf, mit dem die Häufigkeit $m_1$ gewichtet wird. Nach einer Ausführungsform weist der gewichtete Diagnosewert ein zweites Gewicht ($g_2$) auf, mit dem die Häufigkeit $m_2$ gewichtet wird. Nach einer Ausführungsform weist der gewichtete Diagnosewert ein drittes Gewicht ($g_3$) auf, mit dem die Häufigkeit $m_3$ gewichtet wird. In einer Ausführungsform weist der gewichtete Diagnosewert ein viertes Gewicht ($g_4$) auf, mit dem die Häufigkeit $m_4$ gewichtet wird.

Der gewichtete Diagnosewert wird im Rahmen der vorliegenden Anmeldung auch als "gewichtete Thrombozyten-Aggregation" oder als WPA bezeichnet.

Der gewichtete Diagnosewert WPA kann berechnet werden gemäß:

$$WPA = \left(\frac{g_1 \cdot m_1 + g_2 \cdot m_2 + g_3 \cdot m_3 + g_4 \cdot m_4}{N}\right) - 1$$

wobei N die Anzahl aller erfassten Thrombozyten-Objekte in der Probe ist.

Das Gewicht $g_1$ kann kleiner sein als das Gewicht $g_2$, als das Gewicht $g_3$ und/oder als das Gewicht $g_4$. Gemäß einer Ausführungsform ist das Gewicht $g_2$ kleiner als das Gewicht $g_3$ und/oder das Gewicht $g_4$. Gemäß einer Ausführungsform ist das Gewicht $g_3$ kleiner als das Gewicht $g_4$.

In einer Ausführungsform ist gewichtete Diagnosewert WPA an eine biologische (und/oder physiologische) Gegebenheit angepasst. Gemäß einer Ausführungsform ist der gewichtete Diagnosewert WPA an die physiologischen Bedingungen optimiert. Mithilfe des gewichteten Diagnosewertes WPA kann eine kleine Änderung der Häufigkeitsverteilung der Thrombozyten-Aggregationen quantifiziert werden. Größere Thrombozyten-Aggregationen bilden sich erst bei einem höheren Aggregationsreiz. Ebenso unterscheiden sich die Häufigkeiten der Thrombozyten-Aggregationen insbesondere abhängig von der Größe der Thrombozyten-Aggregationen, d. h. abhängig von der Anzahl an Thrombozyten, aus dem die Thrombozyten-Aggregation besteht. Beispielsweise sind Thrombozyten-Aggregationen mit zwei Thrombozyten in einer größeren Anzahl vorhanden im Vergleich zu Thrombozyten-Aggregationen, die drei Thrombozyten aufweisen. Die Gewichte können derart gewählt werden, so dass diese Umstände eine erhöhte Beachtung im gewichteten Diagnosewertes WPA erhalten.

In einer Ausführungsform gilt: $g_1 = 1$, $g_2 = 2$, $g_3 = 3$, und $g_4 = 4$. Der gewichtete Diagnosewert WPA kann nach der Formel

$$WPA = \left( \frac{m_1 + 2 \cdot m_2 + 3 \cdot m_3 + 4 \cdot m_4}{N} \right) - 1$$

berechnet werden.

Der gewichtete Diagnosewert WPA kann einen Wert zwischen 0 und 3, d. h. zwischen 0% und 300 % annehmen. Ein Wert von 0 (0%) bedeutet dabei, dass ausschließlich Thrombozyten-Objekte bestehend aus einem Thrombozyten vorliegen. Das bedeutet, dass keine Thrombozyten-Aggregationen bestehend aus einer Vielzahl von Thrombozyten in einer derartigen Probe detektiert wurden. Mit anderen Worten heißt das, dass die Probe frei von Aggregationen ist.

Ein Wert von 3 (300 %) bedeutet, dass ausschließlich Thrombozyten-Objekte bestehend aus mindestens vier Thrombozyten vorliegen. Das bedeutet, dass keine einzelnen Thrombozyten, keine Thrombozyten-Aggregationen bestehend aus zwei Thrombozyten und keine Thrombozyten-Aggregationen bestehend aus drei Thrombozyten in einer derartigen Probe detektiert wurden.

Der gewichtete Diagnosewert WPA kann zur Charakterisierung der Blutgerinnung genutzt werden.

Ein Beispiel zeigt, dass der gewichtete Diagnosewert WPA von gesunden Probanden, ohne medikamentöse Behandlung, zwischen 5% und 35%, insbesondere zwischen 10% und 25% liegt. Ein Beispiel zeigt, dass der gewichtete Diagnosewert WPA unter Hinzugabe eines Agonisten *in vitro,* beispielsweise Adenosindiphosphat (ADP), zwischen 70% und 90%, insbesondere zwischen 75% und 85% beträgt.

Der gewichtete Diagnosewert WPA kann dafür genutzt werden, die Wirkung eines Thrombozytenaggregationshemmers zu untersuchen bzw. zu überwachen.

Der gewichtete Diagnosewert WPA kann dafür genutzt werden, einen Krankheitsverlauf zu überwachen. Ferner könnte er zum Monitoring von Risikopatienten genutzt werden.

Alternativ kann der gewichtete Diagnosewert WPA dazu verwandt werden, die aktuellen, lokalen, physiologischen Gerinnungseigenschaften von Patientenblut vor einem chirurgischen Eingriff zu charakterisieren. Der gewichtete Diagnosewert WPA (WPA-Parameter) kann für eine Feindiagnostik bei Thrombozytenfunktionsstörungen genutzt werden und beispielsweise helfen, die Funktionsstörung genauer zu beschreiben und zu verstehen.

Der WPA-Parameter kann die physiologischen Gerinnungsfähigkeiten beschreiben. Er kann ohne einen Agonisten bestimmt werden. Dadurch ist vorteilhaft ein direkter Vergleich mehrerer Proben vereinfacht, da aufwendige Standardisierungsprozesse und/oder Vergleiche zwischen unterschiedlichen Reagenzien entfallen.

Gemäß einer Ausführungsform weist der gewichtete Diagnosewert mindestens eine relative Häufigkeit auf. In einer Ausführungsform weist der gewichtete Diagnosewert eine Vielzahl an relativen Häufigkeiten aus.

In einer Ausführungsform weist der gewichtete Diagnosewert die relative Häufigkeit des Thrombozyten-Objektes mit der Anzahl von einem Thrombozyten ($h_1$), die relative Häufigkeit des Thrombozyten-Objektes mit der Anzahl von zwei Thrombozyten ($h_2$), die relative Häufigkeit des Thrombozyten-Objektes mit der Anzahl von drei Thrombozyten ($h_3$) und die relative Häufigkeit des Thrombozyten-Objektes mit der Anzahl von mindestens vier Thrombozyten ($h_4$) auf.

Gemäß einer Ausführungsform wird der gewichtete Diagnosewert WPA nach der Formel

$$WPA = (g_1 \cdot h_1 + g_2 \cdot h_2 + g_3 \cdot h_3 + g_4 \cdot h_4) - 1$$

berechnet.

Eine Ausführungsform ist dadurch gekennzeichnet, dass für eine Vielzahl an Thrombozyten-Objekten der Probe eine Wahrscheinlichkeit von einem Thrombozyten-Objekt mit einer bestimmten Anzahl an Thrombozyten bestimmt wird.

Eine Ausführungsform ist dadurch gekennzeichnet, dass für eine Vielzahl an Thrombozyten-Objekten der Probe eine addierte Wahrscheinlichkeit von einem Thrombozyten-Objekt mit einer bestimmten Anzahl an Thrombozyten bestimmt wird.

Für jede Thrombozyten-Aggregation kann mithilfe des CNN eine Wahrscheinlichkeit bestimmt werden, dass das Thrombozyten-Objekt ein Thrombozyten-Objekt der ersten Klasse ist. Mithilfe des CNN kann eine Wahrscheinlichkeit bestimmt werden, dass das Thrombozyten-Objekt ein Thrombozyten-Objekt der zweiten Klasse ist. Mithilfe des CNN kann eine Wahrscheinlichkeit bestimmt werden, dass das Thrombozyten-Objekt ein Thrombozyten-Objekt der dritten Klasse ist. Mithilfe des CNN kann eine Wahrscheinlichkeit bestimmt werden, dass das Thrombozyten-Objekt ein Thrombozyten-Objekt der vierten Klasse ist.

Das bedeutet, dass das Faltungsnetzwerk dazu eingerichtet ist, für jedes Thrombozyten-Objekt für jede der vier Klassen eine Wahrscheinlichkeit zu ermitteln, dass das besagte Thrombozyten-Objekt zu der Klasse gehört.

In einer Ausführungsform ermittelt das CNN für jedes detektierte Thrombozyten-Objekt jeweils vier Wahrscheinlichkeiten $q_i$, wobei die Wahrscheinlichkeit $q_1$ die Wahrscheinlichkeit ist, dass das detektierte Thrombozyten-Objekt ein Thrombozyten-Objekt der ersten Klasse ist, wobei die Wahrscheinlichkeit $q_2$ die Wahrscheinlichkeit ist, dass das detektierte Thrombozyten-Objekt ein Thrombozyten-Objekt der zweiten Klasse ist, wobei die Wahrscheinlichkeit $q_3$ die Wahrscheinlichkeit ist, dass das detektierte Thrombozyten-Objekt ein Thrombozyten-Objekt der dritten Klasse ist, und wobei die Wahrscheinlichkeit $q_4$ die Wahrscheinlichkeit ist, dass das detektierte Thrombozyten-Objekt ein Thrombozyten-Objekt der vierten Klasse ist.

Für eine Vielzahl von Thrombozyten-Aggregationen N können die $q_i$ je Klasse i zu einer jeweiligen addierten Wahrscheinlichkeit $q'_i$ der Klasse i addiert werden. Für die addierte Wahrscheinlichkeit einer Klasse ergibt sich:

$$q'_i = \sum_{j=1}^{N} q_{i,j}$$

Gemäß einer Ausführungsform wird ein weiterer gewichteter Diagnosewert bestimmt, wobei der weitere gewichtete Diagnosewert mindestens eine Wahrscheinlichkeit eines Thrombozyten-Objektes aufweist.

Gemäß einer Ausführungsform wird der weitere gewichtete Diagnosewert ausgegeben.

Gemäß einer Ausführungsform weist der weitere gewichtete Diagnosewert mindestens eine addierte Wahrscheinlichkeit eines Thrombozyten-Objektes auf.

In einer Ausführungsform weist der weitere gewichtete Diagnosewert die Wahrscheinlichkeit des Thrombozyten-Objektes mit der Anzahl von zwei Thrombozyten auf. In einer Ausführungsform weist der weitere gewichtete Diagnosewert die addierte Wahrscheinlichkeit des Thrombozyten-Objektes mit der Anzahl von zwei Thrombozyten auf.

Gemäß einer Ausführungsform weist der weitere gewichtete Diagnosewert die Wahrscheinlichkeit des Thrombozyten-Objektes mit der Anzahl von drei Thrombozyten auf. Gemäß einer Ausführungsform weist der weitere gewichtete Diagnosewert die addierte Wahrscheinlichkeit des Thrombozyten-Objektes mit der Anzahl von drei Thrombozyten auf.

Gemäß einer Ausführungsform weist der weitere gewichtete Diagnosewert die Wahrscheinlichkeit des Thrombozyten-Objektes mit der Anzahl von mindestens vier Thrombozyten auf. Gemäß einer Ausführungsform weist der weitere gewichtete Diagnosewert die addierte Wahrscheinlichkeit des Thrombozyten-Objektes mit der Anzahl von mindestens vier Thrombozyten auf.

Gemäß einer Ausführungsform weist der weitere gewichtete Diagnosewert die Wahrscheinlichkeit des Thrombozyten-Objektes mit der Anzahl von einem Thrombozyten auf. Gemäß einer Ausführungsform weist der weitere gewichtete Diagnosewert die addierte Wahrscheinlichkeit des Thrombozyten-Objektes mit der Anzahl von einem Thrombozyten auf.

In einer Ausführungsform weist der weitere gewichtete Diagnosewert die addierte Wahrscheinlichkeit des Thrombozyten-Objektes mit der Anzahl von einem Thrombozyten und die addierte Wahrscheinlichkeit des Thrombozyten-Objektes mit der Anzahl von zwei Thrombozyten auf.

In einer Ausführungsform weist der weitere gewichtete Diagnosewert die addierte Wahrscheinlichkeit des Thrombozyten-Objektes mit der Anzahl von einem Thrombozyten und die addierte Wahrscheinlichkeit des Thrombozyten-Objektes mit der Anzahl von drei Thrombozyten auf.

In einer Ausführungsform weist der weitere gewichtete Diagnosewert die addierte Wahrscheinlichkeit des Thrombozyten-Objektes mit der Anzahl von einem Thrombozyten und die addierte Wahrscheinlichkeit des Thrombozyten-Objektes mit der Anzahl von mindestens vier Thrombozyten auf.

In einer Ausführungsform weist der weitere gewichtete Diagnosewert die addierte Wahrscheinlichkeit des Thrombozyten-Objektes mit der Anzahl von zwei Thrombozyten und die addierte Wahrscheinlichkeit des Thrombozyten-Objektes mit der Anzahl von drei Thrombozyten auf.

In einer Ausführungsform weist der weitere gewichtete Diagnosewert die addierte Wahrscheinlichkeit des Thrombozyten-Objektes mit der Anzahl von zwei Thrombozyten und die addierte Wahrscheinlichkeit des Thrombozyten-Objektes mit der Anzahl von mindestens vier Thrombozyten auf.

In einer Ausführungsform weist der weitere gewichtete Diagnosewert die addierte Wahrscheinlichkeit des Thrombozyten-Objektes mit der Anzahl von drei Thrombozyten und die addierte Wahrscheinlichkeit des Thrombozyten-Objektes mit der Anzahl von mindestens vier Thrombozyten auf.

In einer Ausführungsform weist der weitere gewichtete Diagnosewert die addierte Wahrscheinlichkeit des Thrombozyten-Objektes mit der Anzahl von einem Thrombozyten, die addierte Wahrscheinlichkeit des Thrombozyten-Objektes mit der Anzahl von zwei Thrombozyten auf und die addierte Wahrscheinlichkeit des Thrombozyten-Objektes mit der Anzahl von drei Thrombozyten.

In einer Ausführungsform weist der weitere gewichtete Diagnosewert die addierte Wahrscheinlichkeit des Thrombozyten-Objektes mit der Anzahl von einem Thrombozyten, die addierte Wahrscheinlichkeit des Thrombozyten-Objektes mit der Anzahl von zwei Thrombozyten auf und die addierte Wahrscheinlichkeit des Thrombozyten-Objektes mit der Anzahl von mindestens vier Thrombozyten.

In einer Ausführungsform weist der weitere gewichtete Diagnosewert die addierte Wahrscheinlichkeit des Thrombozyten-Objektes mit der Anzahl von zwei Thrombozyten, die addierte Wahrscheinlichkeit des Thrombozyten-Objektes mit der Anzahl von drei Thrombozyten auf und die addierte Wahrscheinlichkeit des Thrombozyten-Objektes mit der Anzahl von mindestens vier Thrombozyten.

In einer Ausführungsform weist der weitere gewichtete Diagnosewert die addierte Wahrscheinlichkeit des Thrombozyten-Objektes mit der Anzahl von einem Thrombozyten, die addierte Wahrscheinlichkeit des Thrombozyten-Objektes mit der Anzahl von zwei Thrombozyten, die addierte Wahrscheinlichkeit des Thrombozyten-Objektes mit der Anzahl von drei Thrombozyten auf und die addierte Wahrscheinlichkeit des Thrombozyten-Objektes mit der Anzahl von mindestens vier Thrombozyten.

In einer Ausführungsform weist der weitere gewichtete Diagnosewert ein weiteres erstes Gewicht ($g_{11}$) auf, mit dem die addierte Wahrscheinlichkeit des Thrombozyten-Objektes mit der Anzahl von einem Thrombozyten ($q'_1$) gewichtet wird.

In einer Ausführungsform weist der weitere gewichtete Diagnosewert ein weiteres zweites Gewicht ($g_{21}$) auf, mit dem die addierte Wahrscheinlichkeit des Thrombozyten-Objektes mit der Anzahl von zwei Thrombozyten ($q'_2$) gewichtet wird.

In einer Ausführungsform weist der weitere gewichtete Diagnosewert ein weiteres drittes Gewicht ($g_{31}$) auf, mit dem die addierte Wahrscheinlichkeit des Thrombozyten-Objektes mit der Anzahl von drei Thrombozyten ($q'_3$) gewichtet wird.

In einer Ausführungsform weist der weitere gewichtete Diagnosewert ein weiteres viertes Gewicht ($g_{41}$) auf, mit dem die addierte Wahrscheinlichkeit des Thrombozyten-Objektes mit der Anzahl von mindestens vier Thrombozyten ($q'_4$) gewichtet wird.

Der weitere gewichtete Diagnosewert FWPA kann berechnet werden gemäß:

$$FWPA = \left( \frac{g_{11} \cdot q'_1 + g_{21} \cdot q'_2 + g_{31} \cdot q'_3 + g_{41} \cdot q'_4}{N} \right) - 1$$

wobei N die Anzahl aller erfassten Thrombozyten-Objekte in der Probe ist.

Das weitere Gewicht $g_{11}$ kann kleiner sein als das weitere Gewicht $g_{21}$, als das weitere Gewicht $g_{31}$ und/oder als das weitere Gewicht $g_{41}$. Gemäß einer Ausführungsform ist das weitere Gewicht $g_{21}$ kleiner als das weitere Gewicht $g_{31}$ und/oder das weitere Gewicht $g_{41}$. Gemäß einer Ausführungsform ist das weitere Gewicht $g_{31}$ kleiner als das weitere Gewicht $g_{41}$.

In einer Ausführungsform gilt: $g_{11} = 1$, $g_{21} = 2$, $g_{31} = 3$, und $g_{41} = 4$. Der weitere gewichtete Diagnosewert FWPA kann nach der Formel

$$FWPA = \left( \frac{1 \cdot q'_1 + 2 \cdot q'_2 + 3 \cdot q'_3 + 4 \cdot q'_4}{N} \right) - 1$$

berechnet werden.

Der weitere gewichtete Diagnosewert kann wie der gewichtete Diagnosewert WPA genutzt werden. Beispielsweise kann der weitere gewichtete Diagnosewert zur Charakterisierung der Blutgerinnung genutzt werden.

Nach einer Ausführungsform weist das trainierte Faltungsnetzwerk mindestens zwei Faltungsschichten und/oder mindestens zwei vollständig verbundene Schichten, insbesondere mindestens vier Faltungsschichten und/oder mindestens vier vollständig verbundene Schichten, auf.

Eine Faltungsschicht ist eine Schicht des CNNs. Eine vollständig verbundene Schicht ist eine Schicht des CNNs. Eine vollständig verbundene Schicht wird im Rahmen der Anmeldung auch als dichte Schicht bezeichnet. Eine entsprechende vollständig verbundene Schicht kann einer zugehörigen Faltungsschicht nachgeschaltet sein. Zwischen der entsprechenden vollständig verbundene Schicht und der zugehörigen Faltungsschicht kann eine Reduzierungsschicht angeordnet sein, wobei die Reduzierungsschicht zur Reduzierung der Dimension eingerichtet ist.

Gemäß einer Ausführungsform weist das trainierte CNN vier Faltungsschichten. Das trainierte CNN kann vier vollständig verbundene Schichten aufweisen.

Eine vollständig verbundene Schicht kann eine Ausgabeschicht sein.

In einer Ausführungsform wird die Anzahl der Faltungsschicht und/oder die Anzahl der vollständig verbundenen Schicht mithilfe eines strukturierten Tests ermittelt, wobei der strukturierte Test dazu eingerichtet ist, die Anzahl der Faltungsschicht und/oder die Anzahl der vollständig verbundenen Schicht derart zu bestimmen, dass das resultierende CNN am besten für das Untersuchungsspektrum geeignet ist.

Eine Ausführungsform ist dadurch charakterisiert, dass das trainierte Faltungsnetzwerk mindestens 60 Neuronen, insbesondere mindestens 80 Neuronen, insbesondere mindestens 100 Neuronen, insbesondere mindestens 104 Neuronen aufweist.

Ein Neuron einer ersten Schicht kann einen eingehenden Datenwert empfangen. Das Neuron der ersten Schicht kann dazu eingerichtet sein, Rechenvorschriften am empfangenen Datenwert vorzunehmen, so dass ein modifizierter Datenwert entsteht. Das Neuron kann den modifizierten Datenwert ausgeben. Insbesondere kann das Neuron der ersten Schicht den modifizierten Datenwert an ein weiteres Neuron geben, wobei das weitere Neuron auf einer zweiten Schicht angeordnet ist, wobei die zweite Schicht der ersten Schicht nachfolgt. Das erste Neuron kann den modifizierten Datenwert an eine Vielzahl weiterer Neuronen der zweiten Schicht geben.

In einer Ausführungsform weist eine erste vollständig verbundene Schicht 40 Neuronen auf. Eine zweite vollständig verbundene Schicht kann 40 Neuronen aufweisen. Eine dritte vollständig verbundene Schicht kann 20 Neuronen aufweisen.

In einer Ausführungsform weist eine vierte vollständig verbundene Schicht 4 Neuronen auf. Insbesondere kann die vierte Schicht eine Anzahl von Neuronen aufweisen, die der Anzahl von Klassen entspricht, in die die Klassifizierung erfolgen kann. In einer Ausführungsform ist dies die erste Klasse (Thrombozyten-Objekt mit einem Thrombozyten), die zweite Klasse (Thrombozyten-Objekt bestehend aus zwei Thrombozyten), die dritte Klasse (Thrombozyten-Objekt bestehend aus drei Thrombozyten) und die vierte Klasse (Thrombozyten-Objekt bestehend aus mindestens viel Thrombozyten).

Die vierte dichte Schicht kann eine Softmax-Funktion aufweisen. Die Softmax-Funktion ist auch unter dem Begriff "normalisierte Exponentialfunktion" bekannt. Durch die Softmax-Funktion kann auf einfache Weise die Summe aller Ausgaben eins sein. Ein Vorteil ist, dass dadurch die Ausgaben als Wahrscheinlichkeiten aufgefasst werden können, dass ein Objekt einer Klasse zugehörig ist. Dies kann zu einem direkten Verständnis der Ausgaben führen. Die Ausgabe bzw. ein Analyseergebnis kann einfach dargestellt und analysiert werden. Eine Aktivierungsfunktion kann ein linearer Gleichrichter sein.

In einer Ausführungsform werden wird eine Vielzahl von Filtern genutzt, um eine Vielzahl von Ausgaben zu generieren. Eine Ausgabe wird im Rahmen der vorliegenden Anmeldung auch als Merkmalskarte bezeichnet.

Ein Filter kann über das Bild der Probe gelegt werden. Der Filter weist Werte auf, die mittels der Werte des Bildes modifiziert, insbesondere multipliziert und/oder addiert, werden. Insbesondere können die Werte derart modifiziert werden, dass die Ausgabe umso größer ist, je ähnlicher sich die Werte des Filter und des Bildes sind. D. h. beispielsweise, dass kleine Ausgaben erzeugt werden, wenn der Wert des Filters stark vom Wert des Bildes abweicht. Identische Werte können hingegen einen hohen Ausgabewert erzeugen. Das ursprüngliche Bild kann derart modifiziert sein, dass es der Passgenauigkeit des Filters entspricht.

In einem Filter kann ein Merkmal repräsentiert werden, welches vom CNN gelernt wird. Die Ausgabe kann eine Merkmalskarte sein.

Gemäß einer Ausführungsform werden 20 Filter angewandt, so dass 20 Merkmalskarten generiert (produziert) werden. Gemäß einer Ausführungsform werden 25 Filter angewandt, so dass 25 Merkmalskarten generiert (produziert) werden.

Eine Faltungsschicht kann mindestens 20 Merkmalskarten aufweisen. Eine Faltungsschicht kann mindestens 25 Merkmalskarten aufweisen. In einer Ausführungsform weist das trainierte CNN vier Faltungsschichten auf, wobei zwei der vier Faltungsschichten jeweils 20 Merkmalskarten aufweisen und wobei zwei der vier Faltungsschichten jeweils 25 Merkmalskarten aufweisen.

In einer Ausführungsform wird die Anzahl der Merkmalskarten mithilfe eines strukturierten Tests ermittelt, wobei der strukturierte Test dazu eingerichtet ist, die Anzahl der Merkmalskarten derart zu bestimmen, dass das resultierende CNN am besten für das Untersuchungsspektrum geeignet ist.

Ein zweiter Aspekt der Erfindung betrifft ein System zur Datenverarbeitung, umfassend Mittel zur Ausführung der erfindungsgemäßen Methode.

Ein dritter Aspekt der Erfindung betrifft ein Computerprogramm, umfassend Befehle, die bei der Ausführung des Computerprogramms durch einen Computer diesen veranlassen, die erfindungsgemäße Methode auszuführen.

Ein weiterer Aspekt der Erfindung betrifft ein computerlesbares Medium, umfassend Befehle, die bei der Ausführung durch einen Computer diesen veranlassen, die erfindungsgemäße Methode auszuführen.

Die Methode kann vielseitig angewandt werden, beispielsweise in der Diagnostik. Sie bietet eine kostengünstige Möglichkeit, die Gerinnungseigenschaften des Blutes genau, präzise und reproduzierbar zu bestimmen. Kleine Thrombozyten-Aggregationen, insbesondere Thrombozyten Aggregationen mit zwei oder drei Thrombozyten, können auf einfache Weise detektiert, charakterisiert und klassifiziert werden.

Nachfolgend wird die Methode anhand einer Figur beschrieben. Dabei zeigen

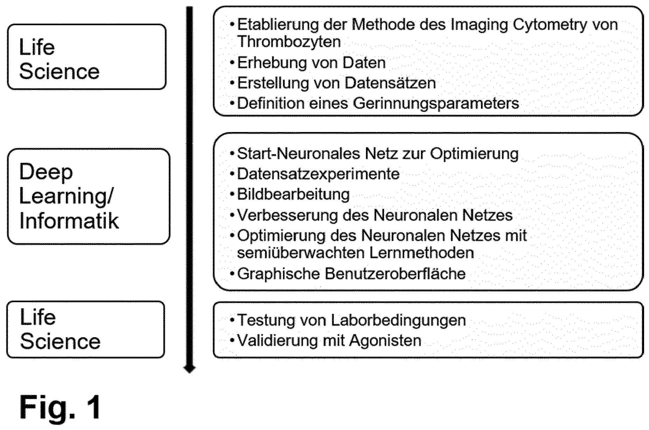

Fig. 1    einen Überblick der Methodenentwicklung,

Fig. 2    eine graphische Darstellung der Ermittlung der Zusammensetzung des optimalen Trainingsdatensatzes,

Fig. 3    eine graphische Darstellung der Häufigkeiten der Klassifikationen pro Klasse,

Fig. 4    einen Vergleich zwischen zwei Methoden zur Schaffung eines einheitlichen Eingangsformats,

Fig. 5    eine Darstellung aus dem bisherigen Stand der Technik zur Identifikation von Thrombozyten-Aggregationen

Fig. 6    eine beispielhafte Zusammenstellung von Thrombozyten-Objekten, die mithilfe der erfindungsgemäßen Methode der erste Klasse zugeordnet wurden,

Fig. 7    eine beispielhafte Zusammenstellung von Thrombozyten-Objekten, die mithilfe der erfindungsgemäßen Methode der zweiten Klasse zugeordnet wurden.

Fig. 8    eine beispielhafte Zusammenstellung von Thrombozyten-Objekten, die mithilfe der erfindungsgemäßen Methode der dritten Klasse zugeordnet wurden, und

Fig. 9    eine beispielhafte Zusammenstellung von Thrombozyten-Objekten, die mithilfe der erfindungsgemäßen Methode der vierten Klasse zugeordnet wurden.

Das entwickelte trainierte CNN kann Thrombozyten-Objekte nach der Anzahl der Thrombozyten, aus denen das Thrombozyten-Objekt besteht, mit einer Genauigkeit von 98% klassifizieren. Ein darauf aufbauendes CNN weist zudem einen Algorithmus-basierten Ausschluss von Bildern mit Erythrozyten auf. Die Genauigkeit der Klassifikation konnte damit auf 99% gesteigert werden. In einer Ausführungsform ist das Programm in einer graphischen Benutzeroberfläche integriert. Dies kann die Benutzerfreundlichkeit erhöhen.

Definition eines Gerinnungsparameters:

Der Gerinnungsparameter kann der gewichtete Diagnosewert WPA sein. Der gewichtete Diagnosewert WPA wurde definiert, der eine Metrik ist, die die Häufigkeit und Größe (Anzahl der Thrombozyten in der Aggregation) von Thrombozyten-Aggregationen widergibt.

Neuronales Netz zur Optimierung: Datensatzexperimente:

Das CNN kann anhand von einem Trainingsdatensatz, insbesondere einer Vielzahl an Trainingsdatensätzen trainiert werden. Die Trainingsdatensätze der Vielzahl an Trainingsdatensätzen können sich unterscheiden, insbesondere in der jeweiligen Zusammensetzung und/oder in der Anzahl der Bilder. Die Bilder eines Trainingsdatensatzes werden im Folgenden auch als Trainingsdaten bezeichnet.

Ein Trainingsdatensatz kann eine Vielzahl an Bildern aufweisen. Ein Bild kann ein Thrombozyten-Objekt aufweisen, dem eine Anzahl von Thrombozyten im Objekt zugeordnet ist.

Das CNN kann mit Trainingsdaten eines mittleren Datensatzes und/oder eines repräsentativen Datensatzes und/oder eines gleichverteilten Datensatzes trainiert werden.

In einer Ausführungsform wurde für die Erstellung eines repräsentativen Datensatzes das Blut von vier gesunden Spendern genommen. Es wurden pro Probe 2000 Bilder aufgenommen, randomisiert 1000 Bilder entnommen und die entnommenen Bilder manuell ausgewertet. Jedes Bild kann einer Klasse (erste Klasse, zweite Klasse, dritte Klasse oder vierte Klasse) zugeordnet werden, d. h. jedes Thrombozyten-Objekt wird anhand der Anzahl der Thrombozyten, aus denen das Thrombozyten-Objekt besteht, klassifiziert.

Der repräsentative Datensatz kann erhöht werden. Insbesondere kann der repräsentative Datensatz erhöht werden, indem ein Bild (insbesondere jedes Bild) rotiert wird. Das Faltungsnetzwerk kann ein Objekt erkennen und unabhängig von der räumlichen Lage des Objektes klassifizieren. Insgesamt kann der repräsentative Datensatz eine Anzahl von 16000 Bildern aufweisen. Insgesamt kann der repräsentative Datensatz eine Anzahl von 8000 Bildern aufweisen.

Ein repräsentativer Datensatz kann die Häufigkeitsverteilung von Thrombozyten-Aggregationen unter physiologischen Bedingungen beschreiben.

Ein gleichverteilter Datensatz kann erstellt werden. Der gleichverteilte Datensatz kann die gleiche Zahl von Bildern für jede Klasse aufweisen. In einer Ausführungsform weisen 25% der Bilder des gleichverteilten Datensatzes einzelne, nicht-aggregierte Thrombozyten (erste Klasse) auf. Weiterhin weisen 25% der Bilder des gleichverteilten Datensatzes Thrombozyten-Aggregate mit einer Anzahl von zwei Thrombozyten auf. Weiterhin weisen 25% der Bilder des gleichverteilten Datensatzes Thrombozyten-Aggregate mit einer Anzahl von drei Thrombozyten auf. Weiterhin weisen 25% der Bilder des gleichverteilten Datensatzes Thrombozyten-Aggregate mit einer Anzahl von mindestens vier Thrombozyten auf.

Ein mittlerer Datensatz kann erstellt werden. Der mittlere Datensatz kann sich aus einem Teil des repräsentativen Datensatzes und einem Teil des gleichverteilten Datensatzes zusammensetzen. Der mittlere Datensatz der Mittelwert aus dem repräsentativen und dem gleichverteilten Datensatz sein.

Für den mittleren Datensatz wurde eine Anzahl von 2000 unikalen Bildern und für den repräsentativen Datensatz eine maximale Anzahl von 4000 unikalen Bildern gewählt. Durch die jeweiligen Rotationen ergeben sich Trainingsdatengrößen von 8000 bzw. 16000 unikalen Bildern. Bei der Erstellung des mittleren Datensatzes werden Datenpunkte der numerisch größten Gruppen ausgeschlossen, um die Anteile numerisch kleinerer Gruppen am Gesamtdatensatz zu erhöhen. Diesem Umstand entsprechend wurde die Trainingsdatengröße des repräsentativen Datensatzes höher gewählt.

In einer Ausführungsform wurde für jeden der drei Datensätze (mittlerer Datensatz, repräsentativer Datensatz; gleichverteilter Datensatz), ein initiales Faltungsnetzwerk trainiert (N = 500). Jedes trainierte CNN wurde anhand der Datensätze validiert (N = 100), so dass sich insgesamt neun verschiedene Untersuchungsbedingungen ergaben. Gemäß einer Ausführungsform wird das Faltungsnetzwerk für jeden Datensatz 12 Mal trainiert und validiert.

In einer Ausführungsform weist der Trainingsdatensatz mindestens 2500 Bilder, insbesondere mindestens 4000, insbesondere mindestens 5000, insbesondere mindestens 7000 Bilder auf. In einer Ausführungsform wird zum Training ein mittlerer Datensatz verwandt.

Bildbearbeitung:

In einer Ausführungsform ist eine Bildbearbeitungsmethode derart optimiert, dass die Einheitlichkeit der Klassifikation der Thrombozyten-Objekte erhöht werden konnte.

In einer Ausführungsform wird ein Bild in einer Auflösung zwischen 30x30 Pixeln und 60x60 Pixeln im tif-Format ausgegeben. Das Bild kann eine Bildtiefe von 8-bit besitzen. Das Bild kann Graustufen aufweisen. Insbesondere kann das Bild in Graustufen eingelesen werden, um die Anzahl der Dimensionen auf eine zu reduzieren.

Das Faltungsnetzwerk benötigt ein einheitliches Eingangsformat. Eine Angleichung der Auflösung der einzelnen Bilder der Vielzahl an Bildern ist erforderlich. Die Angleichung kann durch ein Aufsetzen des Bildes auf einen Hintergrund einer vorgegebenen Größe erreicht werden. Für den Hintergrund jedes Bildes kann eine jeweilige zugehörige Hintergrundfarbe gewählt werden. Die zugehörige Hintergrundfarbe eines Bildes kann aus dem Mittelwert der Farbe der ersten Pixel-Zeile des unformatierten Bildes bestimmt werden.

Vor der Übergabe von Informationen in das neuronale Netzwerk werden die Eingangsdaten normalisiert. Es kann die Normalisierungen in dem abgeschlossenen Intervall [0,1] betrachtet werden. In einer Ausführungsform wird die Normalisierungen in dem abgeschlossenen Intervall [-1,1] betrachtet. Für einzelne Pixelwerte p im Bereich von 0 bis 255 (8-bit) wurden folgende Gleichungen verwendet:

Für die Normalisierung des abgeschlossenen Intervalls [0-,1]:

$$\frac{p}{255}$$

Für die Normalisierung des abgeschlossenen Intervalls [-1,1]:

$$\frac{2p}{255} - 1$$

Gemäß einer Ausführungsform wird ein Bild mittels einer Bildbearbeitungsmethode editiert. In einer Ausführungsform wird ein Bild mithilfe einer mathematischen Funktion editiert. Damit kann der Informationsgehalt des Bildes erhöht werden. Das Eingangssignal in das Faltungsnetzwerk kann somit erhöht bzw. verstärkt werden. Die Bildbearbeitung kann vor der Normalisierung erfolgen, In einer Ausführungsform erfolgt die Bildbearbeitung mittels einer quadratischen Funktion. Alternativ kann die Bildbearbeitung mithilfe einer exponentiellen Funktion durchgeführt werden.

Die Bildbearbeitung mittels einer quadratischen Funktion kann mit einer Methode der Hintergrund-Subtraktion verbunden werden. Die Bildbearbeitung mittels einer exponentiellen Funktion kann mit einer Methode der Hintergrund-Subtraktion verbunden werden.

In einer Ausführungsform werden bei der Methode der Hintergrund-Subtraktion helle (über einem Wert von 200) und dunkle (unter einem Wert von 130) Pixel ausgewählt, die als Aufenthaltsort von einer Thrombozyten-Aggregation gelten. Um sicherzugehen, dass der komplette Bereich der Thrombozyten-Aggregation ausgewählt wird, wird die ausgewählte Fläche dilatiert. Die übrigen Werte können mittels einer binary-threshold (engl.: binäre Schwelle) auf 0 (schwarz) gesetzt werden.

Die Bildbearbeitung mittels einer quadratischen Funktion kann anhand der Formel

$$q(p) = \left( \frac{2}{\sqrt{255}} * p - \sqrt{255} \right)^2$$

erfolgen.

Die Bildbearbeitung mittels einer exponentiellen Funktion kann anhand der Formel

$$e(p) = \frac{255 \left( e^{3\frac{p}{255}} - \sin\left(\frac{p}{255}\right) - 1 \right)}{e^3 - \sin(1) - 1}$$

erfolgen.

Verbesserung des Neuronalen Netzes (Faltungsnetzwerkes):

Eine Ausführungsform sieht vor, dass zur Steigerung der Präzision der Klassifizierung unterschiedliche Strukturen des CNN getestet und verglichen werden.

Testung von Laborbedingungen

Das entwickelte CNN kann anhand von Proben gesunder Menschen getestet werden. In einer weiteren Ausführungsform wird die Methode genutzt, um den Effekt der Lagerung von Blut auf die Gerinnungsfähigkeit, insbesondere die Häufigkeitsverteilung von Thrombozyten-Objekten, zu untersuchen.

Validierung

Weiterhin kann mithilfe der Methode der Effekt einer Substanz auf die Gerinnungsfähigkeit überprüft werden. Die Substanz kann beispielsweise ein Gerinnungshemmer sein. Alternativ könnte die Substanz ein Agonist, z. B. Adenosindiphosphat (ADP), sein. ADP aktiviert die Thrombozytenaggregation.

Ausschluss von Erythrozyten

In einer Ausführungsform ist die Methode dazu eingerichtet, einen Erythrozyten zu erkennen. In einer Ausführungsform ist die Methode dazu ausgebildet, zu erkennen, dass ein Erythrozyt kein Thrombozyten-Objekt der ersten Klasse, der zweiten Klasse, der dritten Klasse und der vierten Klasse ist.

In einer Ausführungsform erfolgt das Erkennen eines Erythrozyten mithilfe eines Faltungsnetzwerkes. Das Faltungsnetzwerk ist dazu eingerichtet, zwischen einem Bild von einem Thrombozyten-Objekt und einem Bild eines Erythrozyten zu unterscheiden. Das Faltungsnetzwerk, das zur Erkennung von Erythrozyten ausgebildet ist, kann für die Detektion und Klassifikation von Thrombozyten-Aggregationen genutzt werden.

Gemäß einer Ausführungsform werden 500 Bilder gewählt, wobei jedes der Bilder ein Thrombozyten-Erythrozyten-Bild. Ein Thrombozyten-Erythrozyten-Bild kann sowohl einen Erythrozyten als auch ein Thrombozyten-Objekt zeigen. In einer Ausführungsform zeigt ein Thrombozyten-Erythrozyten-Bild einen Erythrozyten. Ein Thrombozyten-Bild zeigt ein Thrombozyten-Objekt. Die 500 Thrombozyten-Erythrozyten-Bilder können schrittweise um jeweils 90° gedreht werden. Es kann ein entsprechender Datensatz von 2000 Thrombozyten-Erythrozyten-Bildern bereitgestellt werden.

Die Thrombozyten-Erythrozyten-Bilder können wie oben beschrieben aufgesetzt werden, d. h. auf einen jeweiligen Hintergrund gesetzt werden. In einer Ausführungsform wird ein Thrombozyten-Erythrozyten-Bild nicht mit einer Bildbearbeitungsmethode weiterverarbeitet.

In einer Ausführungsform werden 1500 Thrombozyten-Erythrozyten-Bilder für das Training des CNN genutzt. 250 Thrombozyten-Erythrozyten-Bilder können für die Validierung verwendet werden. 250 Thrombozyten-Erythrozyten-Bilder können für das Testen verwendet werden.

Für die Thrombozyten-Bilder kann ein zuvor erstellter Trainingsdatensatz verwendet werden.

Gemäß einer Ausführungsform ist für das Training ein Verhältnis von Thrombozyten-Bilder zu Thrombozyten-Erythrozyten-Bildern von 4:1 genutzt. Für die Validierung kann ein Verhältnis von Thrombozyten-Bilder zu Thrombozyten-Erythrozyten-Bildern von 2:1 genutzt werden. In einer Ausführungsform ist für die Testung ein Verhältnis von Thrombozyten-Bilder zu Thrombozyten-Erythrozyten-Bildern von 2:1 genutzt. Das CNN kann 50 Mal trainiert und validiert werden. Das beste CNN kann gespeichert werden. Die Güte des CNN kann mithilfe der Sensitivität und der Genauigkeit bestimmt werden,

Untersuchung zu der Zusammensetzung der Datensätze

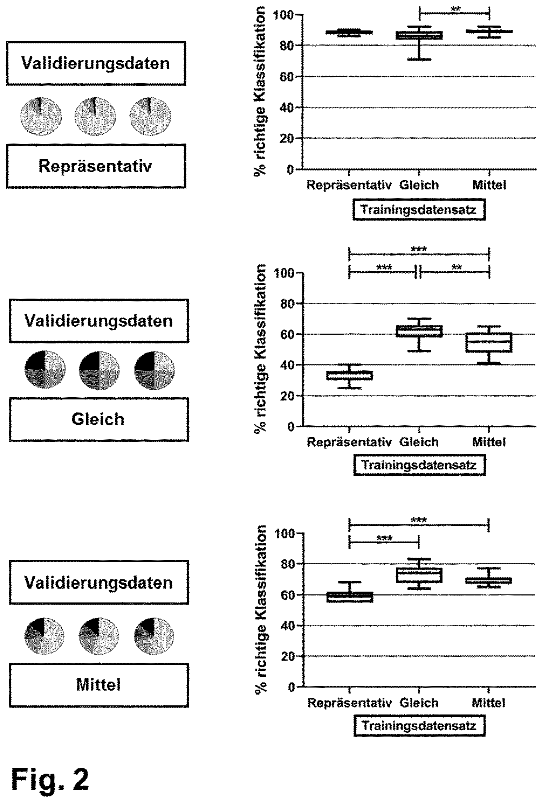

Fig. 2 zeigt eine graphische Darstellung der Untersuchung zu der Zusammensetzung der Datensätze. Bei der Validierung an dem repräsentativen Datensatz war das Training mit dem mittleren Datensatz am besten (89,2 %, Repräsentativ: 88,18 %, Gleich: 85,47 %). Der gleichverteilte Datensatz konnte durch das CNN, das mit dem gleichverteilten Datensatz trainiert wurde, am besten klassifiziert werden (61,8 %). Der mittlere Datensatz kann durch das CNN, das mit dem gleichverteilten Datensatz trainiert wurde, zu 73,2 % klassifiziert werden.

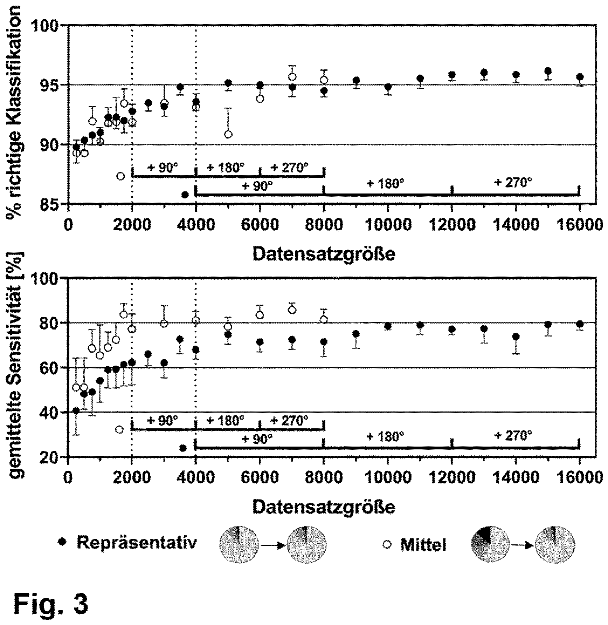

Fig. 3 illustriert, den Einfluss der Größe des Trainingsdatensatzes, d. h. den Einfluss der Anzahl der Bilder des Trainingsdatensatzes, auf die Güte der Klassifikationen und Sensitivität. Es kann eine ebenso gute Güte mit einem kleineren Trainingsdatensatz erzielt werden, wenn dieser Trainingsdatensatz kritische Elemente, die zur Klassifikation genutzt werden, häufiger aufweist.

Bildbearbeitunq

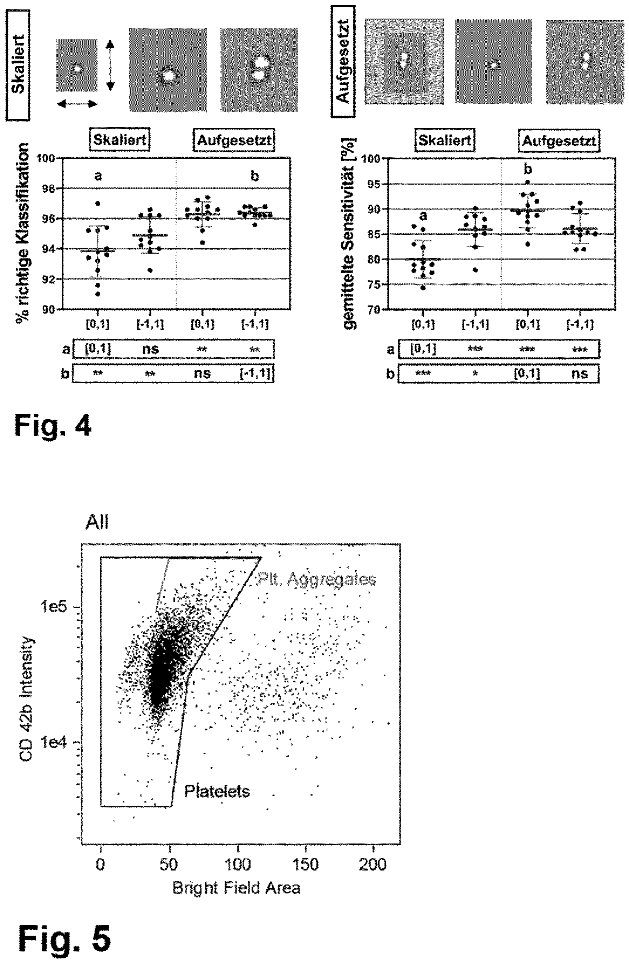

Fig. 4 zeigt einen Vergleich von Methoden, mit denen Bilder auf ein gleiches Format gebracht werden können. Die Methode des Aufsetzens wurde mit einem Standardverfahren, bei dem die Bilder skaliert werden, verglichen. Mithilfe der Methode des Aufsetzens wird im Vergleich zur Methode des Skalierens eine höhere richtige Klassifikation erreicht sowie eine höhere gemittelte Sensitivität. Die Methode des Aufsetzens ist signifikant besser als das Standardverfahren (Skalierung mit Normalisierung zwischen [0,1]). Hierbei lag der Mittelwert bezüglich der richtigen Klassifikation bei 96,3 % ($p = 0,0018$), wenn sie im Intervall von [0,1] normalisiert wurden. Die Normalisierung der Bilder zwischen [-1,1] getätigt wurde, war der Mittelwert bezüglich der richtigen Klassifikation 96,4 % ($p = 0,0013$).

Bei dem Vergleich der gemittelten Sensitivitäten konnte sich die Normalisierung zwischen 0 und 1 mit der Methode des Aufsetzens als beste Methode für das Eingangsformat erweisen (Mittelwert: 89,7 %). Es war zu den Verfahrensweisen der Skalierung signifikant unterschiedlich (Normalisierung [0,1]: $p < 0,0001$, Normalisierung [-1,1]: $p = 0,049$) und ca. 3,6 % besser als die Normalisierung im Intervall von [-1,1] mit der Methode des "Aufsetzens" ($p = 0,059$).

Test

In einer Ausführungsform wurde ein neuer Testdatensatz erstellt, um die Leistung des trainierten CNN hinsichtlich der Klassifikation von unbekannten Thrombozyten-Aggregationen zu überprüfen. Der Testdatensatz kann Bilder von Thrombozyten-Objekten aufweisen. Der Testdatensatz kann 1000 Bilder umfassen. Der Testdatensatz kann ein repräsentativer Datensatz sein. Der Ausschluss von Erythrozyten wurde in einer Ausführungsform an 750 Bildern getestet.

Für die Interpretation der Ergebnisse kann eine Matrix erstellt werden. Gemäß einer Ausführungsform werden die wahren Klassen spaltenweise aufgetragen und deren Klassifikation zeilenweise dargestellt. Hierbei ergibt die Summe einer Spalte die Anzahl aller wahren Bilder einer Klasse und die Summe einer Zeile die Anzahl der Bilder, die in eine Klasse klassifiziert wurden. Die Leistung des trainierten CNN ist umso besser, je höher die Werte in der Diagonalen sind.

In der folgenden Tabelle meint der Begriff "einzeln" die erste Klasse (einzelne Thrombozyten); der Begriff "Doppelt" bezeichnet die zweite Klasse (Thrombozyten-Aggregation bestehend aus zwei Thrombozyten); der Begriff "Dreifach" bezeichnet die dritte Klasse (Thrombozyten-Aggregation bestehend aus drei Thrombozyten); der Begriff "Multiple" bezeichnet die vierte Klasse (Thrombozyten-Aggregation bestehend aus mindestens Vier Thrombozyten).

**A**

| Aggregat Klassifikation | | label | | | | Positiver Prädiktiver Wert [%] |
|---|---|---|---|---|---|---|
| | | Einzeln | Doppelt | Dreifach | Multiple | |
| Klassifikation | Einzeln | 873 | 8 | 0 | 0 | 99,1 |
| | Doppel | 6 | 74 | 2 | 0 | 90,2 |
| | Dreifach | 0 | 1 | 11 | 0 | 91,2 |
| | Multiple | 0 | 0 | 4 | 22 | 84,6 |
| Sensitivität [%] | | 99,3 | 89,5 | 64,7 | 100 | |

**Genauigkeit: 97,9%     Gemittelte Sensitivität: 88,3%**

**B**

| Erythrozyten Klassifikation | | label | | Positiver Prädiktiver Wert [%] |
|---|---|---|---|---|
| | | Thrombozyt | Erythrozyt | |
| Klassifi-kation | Thrombozyt | 485 | 1 | 99,79 |
| | Erythrozyt | 15 | 249 | 94,3 |
| Sensitivität [%] | | 97 | 99,6 | |

**Genauigkeit: 97,9%     Gemittelte Sensitivität: 98,3%**

Stand der Technik

Fig. 5 zeigt eine Abbildung einer Methode des Standes der Technik zur Unterscheidung zwischen einzelnen Thrombozyten und Thrombozyten-Aggregationen.

Nach dem Stand der Technik wird eine Grenze die der Unterscheidung zwischen einzelnen Thrombozyten ("platelets") und Thrombozyten-Aggregationen ("Plt. Aggregates") dient, festgelegt. Diese Grenze wird während der Auswertung manuell vom Benutzer festgelegt. Die Übergänge zwischen Thrombozyten ("platelets") und Thrombozyten-Aggregationen ("Plt. Aggregates") sind jedoch fließend, so dass diese Definition einer starren Grenze dazu führt, dass Objekte den falschen Klassen zugeordnet werden. Die Populationen (Thrombozyten ("platelets") und Thrombozyten-Aggregationen ("Plt. Aggregates")) werden nicht scharf genug getrennt.

Ferner ist diese Methode nicht dazu eingerichtet, eine Thrombozyten-Aggregation mit einer ersten Anzahl von Thrombozyten von einer Thrombozyten-Aggregation mit einer von der ersten Anzahl verschiedenen zweiten Anzahl von Thrombozyten zu unterscheiden.

Klassifikation mithilfe der erfindungsgemäßen Methode

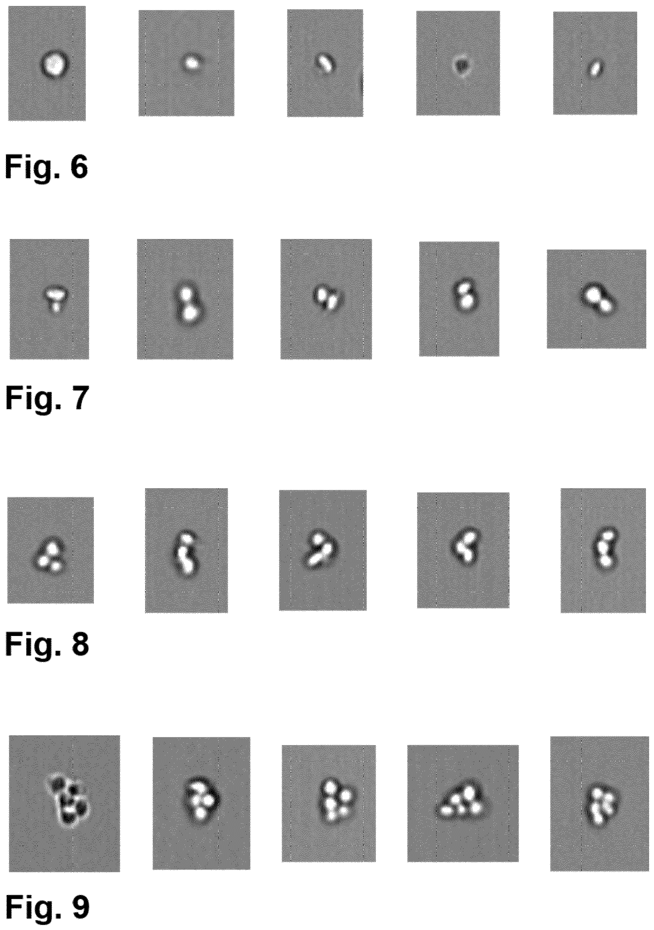

Die Figuren 6 - 9 illustrieren beispielhaft die Klassifikation von Thrombozyten-Objekten mithilfe der Erfindungsgemäßen Methode. Dabei zeigt Fig. 6 Thrombozyten-Objekte, die der ersten Klasse zugeordnet sind. Fig. 7 zeigt Thrombozyten-Objekte, die der zweiten Klasse zugeordnet sind. Fig. 8 zeigt Thrombozyten-Objekte, die der dritten Klasse zugeordnet sind. Fig. 9 zeigt Thrombozyten-Objekte, die der vierten Klasse zugeordnet sind.

Die Figuren 6 - 9 zeigen, dass die klassifizierten Thrombozyten-Objekte unterschiedliche Formen und/oder Größen haben können. Trotz unterschiedlicher Formen und/oder Größen werden die detektierten Thrombozyten-Objekte mithilfe der Methode mit einer hohen Genauigkeit einer Klasse zugeordnet.

Vergleich zwischen der erfindungsgemäßen Methode und einer Methode des Standes der Technik

Ein Testdatensatz wurde mithilfe der erfindungsgemäßen Methode analysiert. Der Testdatensatz wurde zum Vergleich mit einer Methode des Standes der Technik analysiert.

Bei der Methode des Standes der Technik wird anhand einzelner, ausgewählter Merkmale eine Unterscheidung der Aggregationen vorgenommen. Beispielsweise kann anhand der Aggregationsfläche und der Signalintensität des Oberflächenrezeptors CD 42b zwischen einzelnen Thrombozyten und Thrombozyten-Aggregationen mit einer Vielzahl an Thrombozyten unterschieden werden. Die Merkmale, die zur Auswertung herangezogen werden, können vom Benutzer definiert werden.

In der Methode des Standes der Technik wird vom Beobachter selbst eine Grenze definiert, die die Unterscheidung zwischen einzelnen Thrombozyten und Thrombozyten-Aggregationen mit einer Vielzahl an Thrombozyten darstellt. Das bedeutet, dass die Unterscheidung zwischen einzelnen Thrombozyten und Thrombozyten-Aggregationen mit einer Vielzahl an Thrombozyten davon abhängt, wie der Beobachter die Merkmale wahrnimmt und gewichtet und entsprechend die Grenze legt.

Die Merkmale, die untersucht werden können, weisen fließende Übergänge zwischen einzelnen Thrombozyten und Thrombozyten-Aggregationen mit einer Vielzahl an Thrombozyten.

Der Testdatensatz weist 4482 Bilder von Thrombozyten-Objekten auf. Diese wurden mithilfe der erfindungsgemäßen Methode sowie der Methode des Standes der Technik klassifiziert, in Thrombozyten-Objekt bestehend aus einem Thrombozyten oder in Thrombozyten-Objekt bestehend aus einer Vielzahl an Thrombozyten.

Die Ergebnisse sind nachfolgend zusammengestellt:

| Methode des Stades der Technik | | Wahrer Wert | | Positiver Prädiktiver Wert [%] |
|---|---|---|---|---|
| | | Einzeln | Aggregat | |
| Klassifikation | Einzeln | 3462 | 981 | 77,9 |
| | Aggregat | 26 | 13 | 33,3 |
| Sensitivität [%] | | 99,2 | 1,3 | |

| Erfindungs-gemäße Methode | | Wahrer Wert | | | | Positiver Prädiktiver Wert [%] |
|---|---|---|---|---|---|---|
| | | Erste Klasse | Zweite Klasse | Dritte Klasse | Vierte Klasse | |
| Klassifikation | Erste Klasse | 3352 | 6 | 0 | 0 | 99,8 |
| | Zweite Klasse | 100 | 869 | 0 | 0 | 89,6 |
| | Dritte Klasse | 21 | 0 | 104 | 1 | 82,5 |
| | Vierte Klasse | 1 | 1 | 0 | 27 | 93,1 |
| Sensitivität [%] | | 96,5 | 99,2 | 100 | 96,4 | |

Mithilfe der erfindungsgemäßen Methode wurden Thrombozyten-Objekt bestehend aus einem Thrombozyten, d. h. Thrombozyten-Objekte der ersten Klasse, mit einer deutlich höheren Genauigkeit zugeordnet als mittels der Methode des Standes der Technik. Die Anzahl der Fehlklassifikationen ist bei einer Klassifikation mittels der erfindungsgemäßen Methode (6 Fehlklassifikationen) geringer als bei einer Klassifikation mittels der Methode des Standes der Technik (981 Fehlklassifikationen). Die Methode des Standes der Technik klassifiziert eine größere Menge an Thrombozyten-Objekt bestehend aus einer Vielzahl an Thrombozyten zur Klasse der Thrombozyten-Objekte bestehend aus einem Thrombozyten.

Die erfindungsgemäße Methode kann mehr Thrombozyten-Objekte bestehend aus einer Vielzahl an Thrombozyten zu Klassen zuordnen, die Thrombozyten-Objekte bestehend aus einer Vielzahl an Thrombozyten repräsentieren. Während die Methode des Standes der Technik lediglich 39 der 4482 als Thrombozyten-Objekte bestehend aus einer Vielzahl an Thrombozyten klassifiziert (26 Fehlklassifikationen), werden durch die erfindungsgemäße Methode 1124 Thrombozyten-Objekte derartig klassifiziert (123 Fehlklassifikationen).

Die erfindungsgemäße Methode ist dazu eingerichtet, ein Thrombozyten-Objekt bestehend aus einer Vielzahl an Thrombozyten genauer zu klassifizieren, abhängig von der Anzahl der Thrombozyten.

Insbesondere kann die erfindungsgemäße Methode ein Thrombozyten-Objekt der zweiten Klasse, der dritten Klasse oder der vierten Klasse zuordnen.

Zu Vergleichszwecken wurden die Thrombozyten-Objekt, die durch die Methode des Standes der Technik als Thrombozyten-Objekt bestehend aus einer Vielzahl an Thrombozyten klassifiziert wurden, manuell auf die Anzahl der Thrombozyten im jeweiligen Thrombozyten-Objekt untersucht.

Die erfindungsgemäße Methode kann insbesondere Thrombozyten-Objekte der zweiten Klasse und Thrombozyten-Objekte der dritten Klasse besser detektieren als die Methode des Standes der Technik. Die erfindungsgemäße Methode kann das jeweilige detektierte Thrombozyten-Objekt bestehend aus einer Vielzahl an Thrombozyten automatisch der jeweiligen Klassen zuordnen. Die Methode des Standes der Technik unterscheidet nicht zwischen Thrombozyten-Objekten, mit unterschiedlichen Anzahlen von Thrombozyten.

Unter physiologischen Bedingungen liegen insbesondere Thrombozyten-Objekte der ersten Klasse, der zweiten Klasse oder der dritten Klasse im menschlichen Körper vor. Daher ist für eine Analyse und Charakterisierung der Gerinnungseigenschaften des menschlichen Blutes basierend auf den Thrombozyten-Objekten die Detektion und Zuordnung der Thrombozyten-Objekte der ersten Klasse, der zweiten Klasse oder der dritten Klasse von großer Wichtigkeit.

**Patentansprüche**

1. Methode zur Detektion eines Thrombozyten-Objektes und zur Ermittlung einer Anzahl an Thrombozyten in dem Thrombozyten-Objekt in einer Probe, insbesondere wobei die Probe Vollblut aufweist,
wobei mindestens ein Bild aus der Probe aufgenommen wird, wobei insbesondere das mindestens eine Bild mittels eines bildgebenden Durchflusszytometers erzeugt ist,
wobei das mindestens eine Bild der Probe mithilfe eines trainierten Faltungsnetzwerkes untersucht wird,
wobei das trainierte Faltungsnetzwerk dazu eingerichtet ist, auf dem mindestens einem Bild das Thrombozyten-Objekt zu erkennen, und
wobei das trainierte Faltungsnetzwerk dazu ausgebildet ist, eine Anzahl von Thrombozyten in dem erkannten Thrombozyten-Objekt zu bestimmen und auszugeben.

2. Methode nach Anspruch 1, **dadurch gekennzeichnet, dass** das trainierte Faltungsnetzwerk dazu ausgebildet ist, die Anzahl von Thrombozyten in dem erkannten Thrombozyten-Objekt zu bestimmen, wenn die Anzahl der Thrombozyten in dem erkannten Thrombozyten-Objekt eins ist.

3. Methode nach einem der Ansprüche 1 oder 2, **dadurch gekennzeichnet, dass** das trainierte Faltungsnetzwerk dazu ausgebildet ist, die Anzahl von Thrombozyten in dem erkannten Thrombozyten-Objekt zu bestimmen, wenn die Anzahl der Thrombozyten in dem erkannten Thrombozyten-Objekt zwei ist.

4. Methode nach einem der Ansprüche 1 bis 3, **dadurch gekennzeichnet, dass** das trainierte Faltungsnetzwerk dazu ausgebildet ist, die Anzahl von Thrombozyten in dem erkannten Thrombozyten-Objekt zu bestimmen, wenn die Anzahl der Thrombozyten in dem erkannten Thrombozyten-Objekt drei ist.

5. Methode nach einem der Ansprüche 1 bis 4, **dadurch gekennzeichnet, dass** das trainierte Faltungsnetzwerk dazu ausgebildet ist, die Anzahl von Thrombozyten in dem erkannten Thrombozyten-Objekt zu bestimmen, wenn die Anzahl der Thrombozyten in dem erkannten Thrombozyten-Objekt mindestens vier ist.

6. Methode nach einem der Ansprüche 1 bis 5, **dadurch gekennzeichnet, dass** für eine Vielzahl an Thrombozyten-Objekten der Probe eine Häufigkeit von einem Thrombozyten-Objekt mit einer bestimmten Anzahl an Thrombozyten bestimmt wird.

7. Methode nach Anspruch 6, **dadurch gekennzeichnet, dass** ein gewichteter Diagnosewert bestimmt wird, wobei der gewichtete Diagnosewert mindestens eine Häufigkeit eines Thrombozyten-Objektes aufweist.

8. Methode nach Anspruch 7, **dadurch gekennzeichnet, dass** der gewichtete Diagnosewert die Häufigkeit des Thrombozyten-Objektes mit der Anzahl von zwei Thrombozyten aufweist.

9. Methode nach einem der Ansprüche 7 oder 8, **dadurch gekennzeichnet, dass** der gewichtete Diagnosewert die Häufigkeit des Thrombozyten-Objektes mit der Anzahl von drei Thrombozyten aufweist.

10. Methode nach einem der Ansprüche 7 bis 9, **dadurch gekennzeichnet, dass** der gewichtete Diagnosewert die Häufigkeit des Thrombozyten-Objektes mit der Anzahl von mindestens vier Thrombozyten aufweist.

11. Methode nach einem der Ansprüche 7 bis 10, **dadurch gekennzeichnet, dass** der gewichtete Diagnosewert die Häufigkeit des Thrombozyten-Objektes mit der Anzahl von einem Thrombozyten aufweist.

12. Methode nach einem der Ansprüche 1 bis 5, **dadurch gekennzeichnet, dass** für eine Vielzahl an Thrombozyten-Objekten der Probe eine Wahrscheinlichkeit von einem Thrombozyten-Objekt mit einer bestimmten Anzahl an Thrombozyten bestimmt wird.

13. Methode nach Anspruch 12, **dadurch gekennzeichnet, dass** ein weiterer gewichteter Diagnosewert bestimmt wird, wobei der weitere gewichtete Diagnosewert mindestens eine Wahrscheinlichkeit eines Thrombozyten-Objektes aufweist.

14. Methode nach einem der Ansprüche 1 bis 13, **dadurch gekennzeichnet, dass** das trainierte Faltungsnetzwerk mindestens zwei Faltungsschichten und/oder mindestens zwei vollständig verbundene Schichten, insbesondere mindestens vier Faltungsschichten und/oder mindestens vier vollständig verbundene Schichten, aufweist.

15. Methode nach einem der Ansprüche 1 bis 14, **dadurch gekennzeichnet, dass** das trainierte Faltungsnetzwerk mindestens 60 Neuronen, insbesondere mindestens 80 Neuronen, insbesondere mindestens 100 Neuronen, insbesondere mindestens 104 Neuronen aufweist.

Life
Science

- Etablierung der Methode des Imaging Cytometry von Thrombozyten
- Erhebung von Daten
- Erstellung von Datensätzen
- Definition eines Gerinnungsparameters

Deep
Learning/
Informatik

- Start-Neuronales Netz zur Optimierung
- Datensatzexperimente
- Bildbearbeitung
- Verbesserung des Neuronalen Netzes
- Optimierung des Neuronalen Netzes mit semiüberwachten Lernmethoden
- Graphische Benutzeroberfläche

Life
Science

- Testung von Laborbedingungen
- Validierung mit Agonisten

# Fig. 1

**Fig. 2**

Fig. 3

Fig. 4

Fig. 5

Fig. 6

Fig. 7

Fig. 8

Fig. 9

**Europäisches Patentamt**
**European Patent Office**
**Office européen des brevets**

# EUROPÄISCHER RECHERCHENBERICHT

**Nummer der Anmeldung**

EP 19 20 4113

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 9 082 166 B2 (ABBOTT POINT OF CARE INC [US]) 14. Juli 2015 (2015-07-14) * Spalte 9, Zeile 44 - Spalte 10, Zeile 8 * * Spalte 13, Zeilen 9-12 * ----- | 1-15 | INV. G01N15/14 |
| Y | Anonymous: "Multilayer Perceptron (MLP) vs Convolutional Neural Network in Deep Learning", , 22. Dezember 2018 (2018-12-22), XP055686527, Gefunden im Internet: URL:https://web.archive.org/web/2020041615 2505/https://mc.ai/multilayer-perceptron-m lp-vs-convolutional-neural-network-in-deep -learning/ [gefunden am 2020-04-16] * das ganze Dokument * ----- | 1-15 | |
| Y | WO 2019/084513 A1 (ESSENLIX CORP [US]) 2. Mai 2019 (2019-05-02) * Seite 1, Zeilen 19-20 * * Seite 26, Zeilen 31-32 * ----- | 1-15 | **RECHERCHIERTE SACHGEBIETE (IPC)** G01N G06T |
| Y | MOHAMMED MAHMUDUL ALAM ET AL: "Machine learning approach of automatic identification and counting of blood cells", HEALTHCARE TECHNOLOGY LETTERS, Bd. 6, Nr. 4, 17. Juli 2019 (2019-07-17), Seiten 103-108, XP055686529, DOI: 10.1049/htl.2018.5098 * 1. Introduction * * 3.2 YOLO * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 16. April 2020 | Kaiser, Jean-Luc |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 19 20 4113

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-04-2020

| Im Recherchenbericht angeführtes Patentdokument | Datum der Veröffentlichung | Mitglied(er) der Patentfamilie | Datum der Veröffentlichung |
|---|---|---|---|
| US 9082166 B2 | 14-07-2015 | CN 104094118 A | 08-10-2014 |
| | | CN 107064079 A | 18-08-2017 |
| | | EP 2798352 A1 | 05-11-2014 |
| | | EP 3002587 A1 | 06-04-2016 |
| | | EP 3244209 A1 | 15-11-2017 |
| | | ES 2557125 T3 | 22-01-2016 |
| | | ES 2634715 T3 | 28-09-2017 |
| | | US 2013170730 A1 | 04-07-2013 |
| | | US 2015269413 A1 | 24-09-2015 |
| | | US 2017011253 A1 | 12-01-2017 |
| | | US 2018365480 A1 | 20-12-2018 |
| | | WO 2013102076 A1 | 04-07-2013 |
| WO 2019084513 A1 | 02-05-2019 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **K. SATOH et al.** Small Aggregates of Platelets Can Be Detected Sensitively by a Flow Cytometer Equipped With an Imaging Device: Mechanisms of Epinephrine-Induced Aggregation and Antiplatelet Effects of Beraprost. *Cytometry,* 2002, vol. 48, 194-201

- **Y. JIANG et al.** Label-free detection of aggregated platelets in blood by machine-learning-aided optofluidic time-scretch microscopy. *Lab on a Chip,* 2017, vol. 17, 2426-2434